# EUROPEAN PATENT APPLICATION

(11) **EP 4 815 469 A1**
(43) Date of publication of application: **30.09.2026**
(21) Application number: 25803861.1
(22) Date of filing: 05.02.2025
(51) Int. Cl.: H04N 21/4402, H04N 21/44, H04N 21/845

(54) **ELECTRONIC DEVICE, METHOD, AND NON-TRANSITORY COMPUTER-READABLE STORAGE MEDIUM FOR PLAYING BACK VIDEO CONTENT**

(30) Priority: 17.05.2024 KR 20240064854; 18.06.2024 KR 20240078769
(71) Applicant: Samsung Electronics Co., Ltd., Suwon-si, Gyeonggi-do 16677 (KR)
(72) Inventor: HEO, Jin, Suwon-si Gyeonggi-do 16677 (KR); PARK, Hyejeong, Suwon-si Gyeonggi-do 16677 (KR)
(74) Representative: HGF
(86) International application number: PCT/KR2025/001723
(87) International publication number: WO 2025/239503

(57) **Abstract**

According to one embodiment, a method performed by an electronic device comprises an operation of, on the basis of a first seek request related to video content, identifying a first frame related to the first seek request from among a plurality of frames for the video content. The method comprises an operation of decoding frames from a reference frame included in the plurality of frames up to the first frame. The method comprises an operation of storing the one or more decoded frames in a memory of the electronic device on the basis of the decoding.

## Description

### [Technical Field]

The following descriptions relate to an electronic device, a method, and a non-transitory computer readable storage medium for playing video content.

### [Background Art]

An electronic device may play video content. The electronic device may decode frames in the video content in order to play the video content. The video content may be played in a playback section (or a playback time section). The electronic device may provide a function for playing the video content from an indicated timing in the playback section.

The above-described information may be provided as related art for the purpose of helping to understand the present disclosure. No claim or determination is raised as to whether any of the above-described information may be applied as prior art associated with the present disclosure.

### [Disclosure]

### [Technical Solution]

According to an embodiment, an electronic device may include memory storing instructions and including at least one storage medium, and at least one processor including processing circuitry. The instructions, when executed by the at least one processor individually or collectively, may cause the electronic device to identify, based on a first seek request related to video content, a first frame associated with the first seek request, among a plurality of frames for the video content. The instructions, when executed by the at least one processor individually or collectively, may cause the electronic device to perform decoding from a reference frame included in the plurality of frames to the first frame. The instructions, when executed by the at least one processor individually or collectively, may cause the electronic device to store, in the memory, one or more decoded frames based on the decoding.

According to an embodiment, a method performed by an electronic device may include identifying, based on a first seek request related to video content, a first frame associated with the first seek request, among a plurality of frames for the video content. The method may include performing decoding from a reference frame included in the plurality of frames to the first frame. The method may include storing, in the memory of the electronic device, one or more decoded frames based on the decoding.

According to an embodiment, non-transitory computer readable storage medium may store one or more programs. The one or more programs, when executed by a processor of an electronic device with memory, may include instructions that cause to identify, based on a first seek request related to video content, a first frame associated with the first seek request among a plurality of frames for the video content. The one or more programs, when executed by the processor, may include instructions that cause to perform decoding from a reference frame include in the plurality of frames to the first frame. The one or more programs, when executed by the processor, may include instructions that cause to store, in the memory, one or more decoded frames based on the decoding.

### [Description of the Drawings]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment.
FIG. 2 illustrates an example in which decoding is repeated in an electronic device.
FIG. 3A illustrates an example of a simplified block diagram of an electronic device.
FIG. 3B illustrates an example of layers configured in an electronic device for playing video content according to a seek request.
FIG. 4 illustrates a flowchart of an operation of an electronic device for outputting a frame according to a seek request.
FIG. 5A illustrate a flowchart of an operation of an electronic device for determining a method for storing one or more decoded frames.
FIG. 5B illustrates an example of buffers configured according to a method for storing one or more decoded frames.
FIG. 6 illustrates an example of an operation of an electronic device according to a first seek request.
FIG. 7 illustrates an example of an operation of an electronic device according to a first seek request.
FIG. 8 illustrates an example of an operation of an electronic device according to a first seek request and a second seek request.
FIG. 9A illustrates an example of an operation of an electronic device according to a first seek request and a second seek request.
FIG. 9B illustrates an example of an operation of an electronic device according to a first seek request and a second seek request.
FIG. 10 illustrates an example of an operation of an electronic device according to a first seek request and a second seek request.
FIG. 11A is illustrate a flowchart of an operation of an electronic device in a case that an error occurs in the designated number of buffers allocated for a seek request.
FIG. 11B illustrates an example in which the number of buffers allocated for a seek request is reduced.
FIG. 12A illustrates an example of buffers allocated for a seek request, based on a second mode.
FIG. 12B illustrates an example of additional buffers allocated for a seek request based on a second mode.
FIG. 13A illustrates an example of a user interface for a seek request.
FIG. 13B illustrates an example of a user interface for a seek request.
FIG. 13C illustrates an example of a user interface for a seek request.

### [Mode for Invention]

Hereinafter, an embodiment of the present disclosure will be described in detail with reference to a drawing so that those having ordinal knowledge in the art to which the present disclosure belongs may easily implement the present disclosure. However, the present disclosure may be implemented in several different forms and is not limited to an embodiment described herein. With respect to the description of the drawing, the same or similar reference numerals may be used for the same or a similar component. In addition, in the drawing and the related description, the description of a well-known function and configuration may be omitted for clarity and brevity.

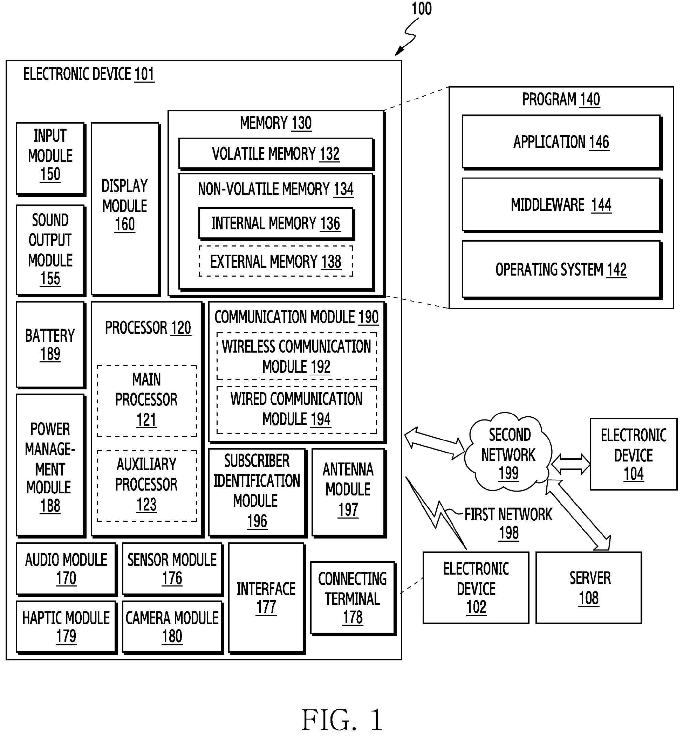

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., an electronic device 101) may play video content. The video content may be configured based on a plurality of frame sets. One frame set may include a plurality of frames. The plurality of frames may include an intra-coded frame (I frame) and at least one predicted frame (P frame). According to an embodiment, the plurality of frames may also include a bi-directionally predicted frame (B frame). In the following specification, the plurality of frames will be described as including the I frame and the at least one P frame. The I frame may be referred to as a reference frame. The P frame may be referred to as a predicted frame.

For example, in the video content, a playback section may be configured. The electronic device may identify a seek request for playing video content from a first timing (or a first seek time) in the playback section. The electronic device may identify a frame set associated with the first timing and decode the reference frame (or I frame) of the identified frame set. The electronic device may sequentially perform a decoding of frames from the reference frame of the frame set to the frame for the first timing to output a frame for the first timing. Whenever the seek request is identified, the electronic device may perform the decoding the frames from the reference frame to the frame for a timing (or a seek time) according to the seek request. When the plurality of seek requests is identified, the decoding may be repeated. When the decoding is repeated, resource (e.g., a processing resource, or a time resource of the electronic device) consumption may increase. Therefore, in the following specification, a technical feature for storing decoded frames based on a first seek request and outputting one of the decoded frames based on a second seek request will be described. In the following specification, a timing according to the seek request may be referred to as a seek timing according to the seek request.

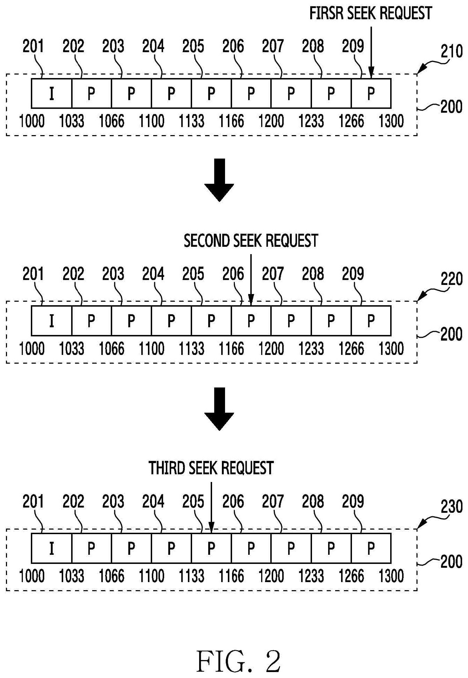

In FIG. 2, in a case that the plurality of seek requests is identified, a detailed example in which the decoding is repeated will be described.

FIG. 2 illustrates an example in which decoding is repeated in an electronic device.

Referring to FIG. 2, a processor 120 of an electronic device 101 may play video content. The video content may include a plurality of frame set. The processor 120 may identify a seek request. The seek request may be received from a user or an external electronic device. For example, the video content may be played through a software application for a playback of the video content. The software application may provide a user interface for the playback of the video content. The user interface may include an element (e.g., a playback bar, a scrub bar, a scrubber seek bar, a progress bar, or a track slider) configured based on a playback section of the video content. The processor 120 may identify the seek request based on an input for the element. As an example, the processor 120 may indicate the playback section through the element. The processor 120 may identify the input indicating a specific timing through the element. The processor 120 may identify the input indicating the specific timing as the seek request.

In a state 210, the processor 120 may identify (or receive) a first seek request. The processor 120 may identify a first timing (or a first seek time) in the playback section based on the first seek request. The processor 120 may identify a frame set 200 including a frame associated with the first timing. The frame set 200 may include an I frame 201 and a P frame 202 to a P frame 209.

According to an embodiment, the I frame 201 may be displayed at 1000 milliseconds [ms] to 1032 [ms] in the playback section of the video content. The P frame 202 may be displayed at 1033 [ms] to 1065 [ms] in the playback section of the video content. A P frame 203 may be displayed at 1066 [ms] to 1099 [ms] in the playback section of the video content. A P frame 204 may be displayed at 1100 [ms] to 1132 [ms] in the playback section of the video content. A P frame 205 may be displayed at 1133 [ms] to 1165 [ms] in the playback section of the video content. A P frame 206 may be displayed at 1166 [ms] to 1199 [ms] in the playback section of the video content. A P frame 207 may be displayed at 1200 [ms] to 1232 [ms] in the playback section of the video content. A P frame 208 may be displayed at 1233 [ms] to 1265 [ms] in the playback section of the video content. A P frame 209 may be displayed at 1266 [ms] to 1300 [ms] in the playback section of the video content.

According to an embodiment, the first timing according to the first seek request may be 1266 milli-seconds [ms]. The processor 120 may identify the P frame 209, based on the first timing. The processor 120 may perform the decoding to output (or provide or display) the P frame 209. The processor 120 may decode 9 frames from the I frame 201 to the P frame 209 in order to decode the P frame 209. The processor 120 may obtain the decoded P frame 209, based on decoding the 9 frames. The processor 120 may output (or provide or display) the decoded P frame 209.

According to an embodiment, in a case that time required for decoding 1 frame is 15 [ms], 135 [ms] may be required to decode (or output) the P frame 209. The processor 120 may sequentially perform the decoding of frames from the I frame 201 to the P frame 209. The processor 120 may perform the decoding until the P frame 209 is decoded. Even when decoding is performed from the I frame 201 to the P frame 208, the processor 120 may return the decoded frames to a decoder. The processor 120 may remove the decoded frames from the I frame 201 to the P frame 208 from the buffer even when the decoding is performed from the I frame 201 to the P frame 208.

In a state 220, after the P frame 209 is outputted (or provided or displayed) according to the first seek request, the processor 120 may identify a second seek request. The processor 120 may identify a second timing (or a second seek time) in the playback section, based on the second seek request. The frame set 200 including a frame associated with the second timing may be identified. The frame associated with the second timing may be included in the frame set 200 including the frame associated with the first timing.

According to an embodiment, the second timing (or the second seek time) according to the second seek request may be 1166 [ms]. The processor 120 may identify the P frame 206, based on the second timing. The processor 120 may perform the decoding to output (or provide or display) the P frame 206. The processor 120 may decode 6 frames from the I frame 201 to the P frame 206 in order to decode the P frame 206. The processor 120 may obtain the decoded P frame 206, based on decoding the 6 frames. The processor 120 may output (or provide or display) the decoded P frame 209.

According to an embodiment, in a case that time required for decoding 1 frame is 15 [ms], 90 [ms] may be required to decode (or output) the P frame 206. The processor 120 may sequentially perform decoding frames from the I frame 201 to the P frame 206. The processor 120 may perform the decoding until the P frame 206 is decoded. Even when decoding is performed from the I frame 201 to the P frame 205, the processor 120 may return the decoded frames to the decoder. The processor 120 may remove the decoded frames from the I frame 201 to the P frame 205 from the buffer even when the decoding is performed from the I frame 201 to the P frame 205.

In a state 230, after the P frame 206 is outputted (or provided or displayed) according to the second seek request, the processor 120 may identify a third seek request. The processor 120 may identify a third timing (or a third seek time) in the playback section, based on the third seek request. The frame set 200 including the frame associated with the third timing may be identified. The frame associated with the third timing may be included in the frame set 200 including the frame associated with the first timing, and the frame associated with the second timing.

According to an embodiment, the third timing according to the third seek request may be 1133 [ms]. The processor 120 may identify the P frame 205, based on the third timing. The processor 120 may perform the decoding to output (or provide or display) the P frame 205. The processor 120 may decode 5 frames from the I frame 201 to the P frame 205 in order to decode the P frame 205. The processor 120 may obtain the decoded P frame 205, based on decoding the 5 frames. The processor 120 may output (or provide or display) the decoded P frame 205.

According to an embodiment, in a case that time required for decoding 1 frame is 15 [ms], 75 [ms] may be required to decode (or output) the P frame 205. The processor 120 may sequentially perform decoding frames from the I frame 201 to the P frame 205. The processor 120 may perform the decoding until the P frame 205 is decoded. Even when decoding is performed from the I frame 201 to the P frame 204, the processor 120 may return the decoded frames to the decoder. The processor 120 may remove the decoded frames from the I frame 201 to the P frame 204 from the buffer even when the decoding is performed from the I frame 201 to the P frame 204.

In the state 210, the processor 120 may perform decoding frames from the I frame 201 to the P frame 209 for decoding the P frame 209. In the state 220, the processor 120 may perform decoding frames from the I frame 201 to the P frame 206 for decoding the P frame 206. In the state 230, the processor 120 may perform decoding frames from the I frame 201 to the P frame 205 for decoding the P frame 205.

As described above, the same frames are repeatedly decoded whenever decoding is performed for a seek request in a reverse direction. Hereinafter, a technical feature for outputting frames stored in a buffer and decoded, based on the seek request in the reverse direction after storing the decoded frames in the buffer will be described later.

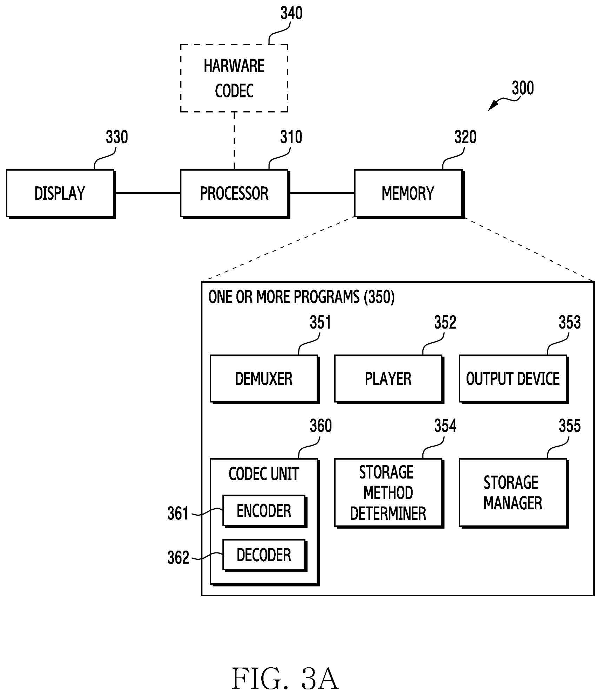

FIG. 3A illustrates an example of a simplified block diagram of an electronic device.

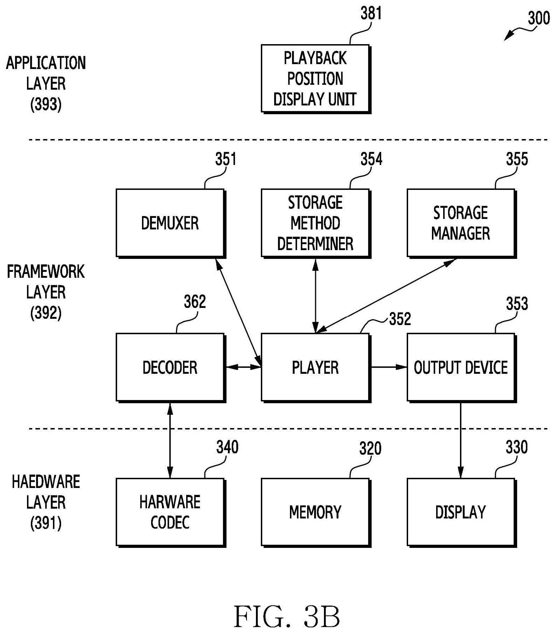

FIG. 3B illustrates an example of layers configured in an electronic device for playing video content according to a seek request.

Referring to FIG. 3A, an electronic device 300 may be used for playing the video content. For example, the electronic device 300 may include at least a portion or all of components of the electronic device 101 of FIG. 1. For example, the electronic device 300 may correspond to the electronic device 101 of FIG. 1.

According to an embodiment, the electronic device 300 may include a processor 310, memory 320, a display 330, and/or a hardware codec 340. According to an embodiment, the electronic device 300 may include at least one of the processor 310, the memory 320, the display 330, and/or the hardware codec 340. For example, at least a portion of the processor 310, the memory 320, the display 330, and the hardware codec 340 may be omitted according to an embodiment.

According to an embodiment, in a case that a codec unit 360 included in the memory 320 performs a function of the hardware codec 340, the electronic device 300 may not include the hardware codec 340. For example, in a case that the hardware codec 340 performs the function of the codec unit 360 included in the memory 320, the electronic device 300 may not include the codec unit 360. According to an embodiment, the electronic device 300 may include both the hardware codec 340 and the codec unit 360.

According to an embodiment, the processor 310 may be operatively (or operably) coupled with or connected with the memory 320, the display 330, and/or the hardware codec 340. The processor 310 being operatively coupled with or connected with the memory 320, the display 330, and/or the hardware codec 340 may mean that the processor 310 may control the memory 320, the display 330, and/or the hardware codec 340. For example, the memory 320, the display 330, and/or the hardware codec 340 may be controlled by the processor 310.

According to an embodiment, the processor 310 may include at least a portion of the processor 120 of FIG. 1 or may correspond to at least a portion of the processor 120. For example, the processor 310 may include one or more processors including an application processor (AP) and/or a communication processor (CP). For example, the processor 310 may be implemented as a single chip such as a system-on-a-chip (SoC) or may be implemented as multiple chips. For example, the processor 310 may be implemented as one integrated circuit or multiple integrated circuits. For example, the processor 310 may be arranged in the electronic device 300.

According to an embodiment, the display 330 of the electronic device 300 may output visualized information (e.g., a screen) to a user. For example, the display 330 may output the visualized information to the user, by being controlled by a controller such as a graphic processing unit (GPU). The display 330 may include a liquid crystal display (LCD), a plasma display panel (PDP), and/or one or more light emitting diode (LED). The LED may include an organic LED (OLED). The display 330 may include a flat panel display (FPD) and/or electronic paper. An embodiment is not limited thereto, and the display 330 may have at least a partially curved shape or a deformable shape. The display 330 having the deformable shape may be referred to as a flexible display.

According to an embodiment, the memory 320 of the electronic device 300 may include circuitry and/or a storage medium for storing data and/or instructions inputted and/or outputted to the processor 310. For example, the memory 320 may include volatile memory such as random-access memory (RAM) and/or non-volatile memory such as read-only memory (ROM). The non-volatile memory may be referred to as storage. For example, the volatile memory may include at least one of dynamic RAM (DRAM), static RAM (SRAM), cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), and an embedded multimedia card (eMMC).

According to an embodiment, the memory 320 may include at least a portion of the memory 130 of FIG. 1 or may correspond to at least a portion of the memory 130 of FIG. 1. For example, the memory 320 may be implemented as the single chip or may be implemented as the multiple chips. For example, the memory 320 may be implemented as the one integrated circuit or may be implemented as the multiple integrated circuits. For example, the memory 320 may be arranged in the electronic device 101.

According to an embodiment, the processor 310 of the electronic device 300 may perform a function and/or an operation indicated by the instructions, by executing the instructions of the memory 320 in the electronic device 300. For example, in a case that the electronic device 300 includes at least one processor, the at least one processor may be configured to execute the instructions collectively or individually.

According to an embodiment, the instructions may be included in one or more programs 350 (e.g., a demuxer 351, a player 352, an output device 353, a codec unit 360, a storage method determiner 354, and a storage manager 355) stored in the memory 320.

According to an embodiment, each of the demuxer 351, the player 352, the output device 353, the codec unit 360, the storage method determiner 354, and the storage manager 355 may include instructions. According to an embodiment, each of the demuxer 351, the player 352, the output device 353, the codec unit 360, the storage method determiner 354, and the storage manager 355 may be executed by the processor 310.

According to an embodiment, the player 352 may control an operation of the demuxer 351, the output device 353, the codec unit 360, the storage method determiner 354, and the storage manager 355. For example, the player 352 may control a playback of video content, by controlling the operation of the demuxer 351, the output device 353, the codec unit 360, the storage method determiner 354, and the storage manager 355. As an example, the player 352 may process a seek request for the video content by controlling the operation of the demuxer 351, the output device 353, the codec unit 360, the storage method determiner 354, and the storage manager 355.

According to an embodiment, the player 352 may obtain (or identify) an input associated with the playback of the video content. For example, the player 352 may obtain the input for the playback of the video content or stopping the playback of the video content. For example, the player 352 may obtain the input for adjusting the playback speed of the video content. For example, the player 352 may obtain the seek request. The seek request may refer to a request (or the input) for changing a playback position of the video content.

According to an embodiment, the demuxer 351 may demux a file (or a stream obtained through wired/wireless communication) for the video content. For example, the demuxer 351 may obtain a video stream and/or an audio stream by parsing a file. For example, the demuxer 351 may include at least one demuxer according to a muxed form. The demuxer 351 may include at least one of an MP4 demuxer, an AVI demuxer, and/or a Matroska Video (MKV) demuxer. However, it is not limited thereto. For example, the demuxer 351 may include another type of the demuxer in addition to the MP4 demuxer, the AVI demuxer, and/or the MKV demuxer.

In an embodiment, the demuxer 351 may identify a position of a designated frame in the video content. The demuxer 351 may identify a frame set associated with a playback timing among a plurality of frame sets of the video content. The demuxer 351 may identify the frame set, based on identifying the position of the designated frame. The demuxer 351 may identify the frame set including the designated frame.

According to an embodiment, the frame set may be referred to as a 'group of pictures' (GOP). For example, the frame set may be configured with a plurality of frames from an I frame to a P frame before a next I frame. For example, the demuxer 351 may identify the I frame in the identified frame set.

According to an embodiment, the codec unit 360 may include an encoder 361 and a decoder 362. For example, the encoder 361 may compress a video stream. For example, the decoder 362 may decompress the compressed video stream. The decoder 362 may obtain the video stream of a designated format (e.g., a YUV format), based on decompression of the compressed video stream. According to an embodiment, in a case that the electronic device 300 includes the hardware codec 340, a portion or all of the codec unit 360 may be included in the hardware codec 340.

According to an embodiment, the I frame may be decoded without referring to another frame. The P frame may be decoded with reference to a previous P frame and/or the I frame. However, it is not limited thereto. According to an embodiment, the plurality of frames may include a bi-directional predicted (B) frame. In an embodiment, the B frame may be decoded with reference to the following P frame and/or the preceding I frame. In an embodiment, the B frame may be decoded by referring to the following B or P frame and/or the preceding I frame, in its GOP.

According to an embodiment, the output device 353 may obtain the video stream of the designated format and output the video stream of the designated format (e.g., a YUV format) through the display 330.

According to an embodiment, the storage method determiner 354 may identify the number of buffers (e.g., the minimum number of buffers) that may be secured in the player according to the seek request (e.g., a seek request in a reverse direction). The storage method determiner 354 may determine, based on the identified number of the buffers, a method for storing one or more decoded frames.

According to an embodiment, the method for storing one or more decoded frames may be changed according to a first mode and a second mode, which are modes for seeking the video content. For example, the first mode and the second mode may be configured based on configuration information for the video content. The configuration information for the video content may include at least one of information on a mode for seeking the video content, information on memory resource for the video content, the number of playbacks of the video content, an average playback time of the video content, the number of seek requests of the video content, or the number of frames in the group of pictures (GOP), of the video content.

According to an embodiment, the first mode may be configured for efficient memory management and use of the decoder 362. For example, in the first mode, a memory area allocated for the decoder 362 may be shared. Since the memory area allocated for the decoder 362 is shared, at least one buffer allocated for the decoder 362 may be used in the player 352. Since the memory area allocated for the decoder 362 is shared, the at least one buffer allocated for the decoder 362 may be used in the output device 353. Accordingly, the decoded video may be outputted without being copied to the display 330. Therefore, in the first mode, a memory (or a buffer) copy process in which memory is allocated to a minimum and a high load is generated in the processor 310 (e.g., CPU) may not be performed.

According to an embodiment, in the second mode, the player 352 may copy buffers allocated to the decoder 362 to output decoded frames. As the player 352 copies the buffers allocated to the decoder 362, the number of buffers may not be limited.

According to an embodiment, among first buffers allocated for decoding in the first mode, the designated number of buffers may be allocated for a seek request. In the first mode, the processor 310 may use the designated number of the buffers among the first buffers previously allocated for decoding for the seek request. Since the designated number of buffers among the pre-allocated first buffers are used for the seek request, the number of buffers used for the seek request may be limited.

According to an embodiment, the first buffers allocated for decoding may be configured as follows. The first buffers may include buffers necessary for decrypting in the codec unit 360, buffers for reducing (or preventing) video disconnection in the playback, and buffers necessary in the output device 353. For example, the number of first buffers may be configured with a sum of the minimum number of the buffers required for decrypting in the codec unit 360, the number of the buffers for reducing (or preventing) the video disconnection in the playback, and the minimum number of the buffers required in the output device 353. In the first mode, among the first buffers, the buffers for reducing (or preventing) the disconnection of the video in the playback may be allocated for the seek request. The processor 310 may allocate, among the first buffers, the buffers for reducing (or preventing) the disconnection of the video in the playback for the seek request.

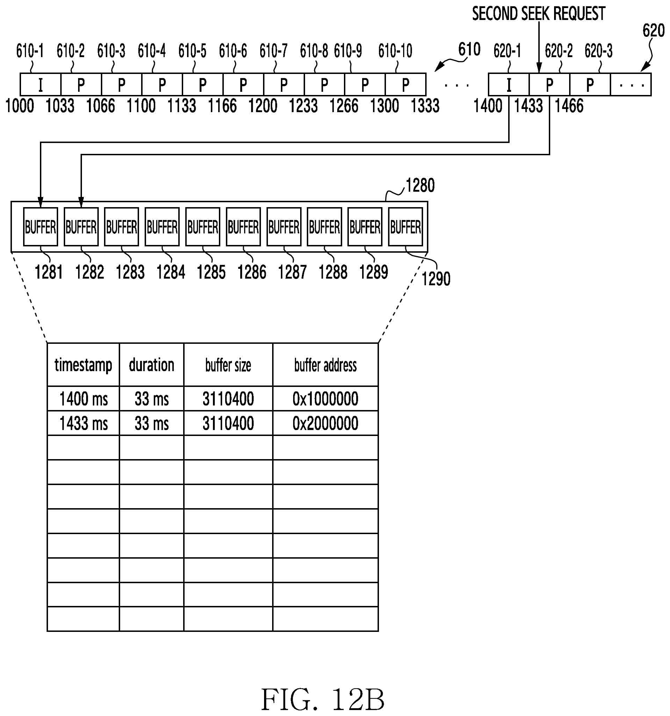

According to an embodiment, in the second mode, as the player 352 copies the buffers allocated to the decoder 362, buffers for the seek request may be allocated from the memory 320. Therefore, the number of buffers allocated for the seek request according to the second mode may be greater than the number of buffers used for the seek request according to the first mode. In the second mode, the number of buffers allocated for the seek request may be increased through double buffering (or triple buffering). A specific example of double buffering will be described later in FIG. 12B.

According to an embodiment, in a case that the seek request (e.g., a seek request in a reverse direction) is identified, the storage manager 355 may obtain the buffers for the seek request and store one or more decoded frames according to the method for storing one or more decoded frames determined through the storage method determiner 354. In a case that the decoded frame corresponding to the frame associated with the seek request is stored in the buffer, the storage manager 355 may immediately output the decoded frame.

According to an embodiment, although not illustrated, the memory 320 may further include instructions for a playback position display unit (e.g., a playback position display unit 381 of FIG. 3B). The playback position display unit may display an element (e.g., a playback bar, a scrub bar, a scrubber seek bar, a progress bar, or a track slider) for indicating a playback timing which is currently being played from the player 352, a length of the playback section of the video content, and the playback timing. For example, the playback position display unit may receive the seek request from the user and transmit (or provide) the seek request to the player 352.

According to an embodiment, at least one of the demuxer 351, the player, the output device 353, the codec unit 360, the storage method determiner 354, and the storage manager 355 may be configured as hardware (e.g., the processor, the integrated circuit (IC) chip, and the graphic processing unit (GPU). However, it is not limited thereto. At least one of the demuxer 351, the player 352, the output device 353, the codec unit 360, the storage method determiner 354, and the storage manager 355 may be implemented as a software module (or a program). According to an embodiment, at least a portion of a function of the codec unit 360 may be performed in the hardware codec 340.

Referring to FIG. 3B, layers configured in the electronic device 300 for playing the video content according to the seek request may include a hardware layer 391, a framework layer 392, and an application layer 393. For example, the hardware layer 391 may include the memory 320, the display 330, and the hardware codec 340. For example, the framework layer 392 may include the demuxer 351, the player 352, the output device 353, the storage method determiner 354, the storage manager 355, and the decoder 362. For example, the application layer 393 may include the playback position display unit 381.

According to an embodiment, in a case that the video content is played, the player 352 may obtain the video stream through the demuxer 351. The player 352 may provide (or transmit) the obtained video stream (e.g., frames) to the decoder 362. The player 352 may obtain decompressed video stream (e.g., frames) from the decoder 362. The player 352 may provide (or transmit) the decompressed video stream (e.g., the decoded frames) to the output device 353. The output device 353 may display the video content through the display 330. The playback position display unit 381 may obtain information on a timing currently being played from the player 352. The playback position display unit 381 may display the timing currently being played through a user interface in the playback section for the video content.

According to an embodiment, in a case that the seek request is identified, the player 352 may request the video stream associated with the timing according to the seek request from the demuxer 351. The player 352 may obtain the video stream associated with the timing according to the seek request from the demuxer 351. The player 352 may provide (or transmit) the obtained video stream (e.g., the frames) to the decoder 362. The player 352 may obtain the decompressed video stream (e.g., the frames) from the decoder 362. The player 352 may provide (or transmit) the decompressed video stream (e.g., the decoded frames) to the output device 353. The output device 353 may display the video content through the display 330. The playback position display unit 381 may obtain the information on the timing currently being played from the player 352. The playback position display unit 381 may display the timing currently being played through the user interface in the playback section for the video content. For example, the player 532 may play the video content and process a position move command, by using the demuxer 351, the decoder 362, the output device 353, the storage method determiner 354, and/or the storage manager 355. For example, the playback position display unit 381 may display a position of the element (e.g., the playback bar, the scrub bar, the scrubber seek bar, the progress bar, or the track slider) configured based on a position currently being played, the length of the video content (e.g., media) being played, and the playback section of the video content. The playback position display unit 381 may transmit a request to the player 532, based on the request for moving the playback position being received from the user.

According to an embodiment, in a case that the decoded frame corresponding to the frame associated with the timing according to the seek request is stored in the buffer, the storage manager 355 may provide the decoded frame to the player 352. The player 352 may provide the decoded frame to the output device 353. The output device 353 may display, through the display 330, the frame associated with the timing according to the seek request.

In the following specification, for convenience of a description, the operation of the demuxer 351, the player 352, the output device 353, the codec unit 360, the storage method determiner 354, and the storage manager 355 will be described as being performed by the processor 310. For example, the processor 310 may perform at least one operation for outputting the frame according to the seek request, by using at least one of the demuxer 351, the player 352, the output device 353, the codec unit 360, the storage method determiner 354, and the storage manager 355.

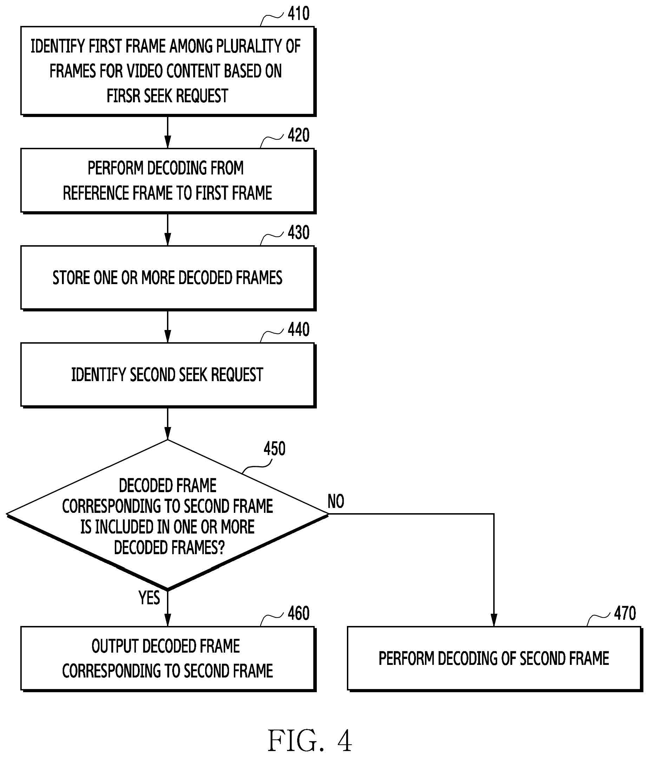

FIG. 4 illustrates a flowchart of an operation of an electronic device for outputting a frame according to a seek request. In the following embodiment, each operation may be performed sequentially, but is not necessarily performed sequentially. For example, an order of each operation may be changed, and at least two operations may be performed in parallel.

Referring to FIG. 4, in an operation 410, a processor 310 of an electronic device 300 may identify, based on a first seek request, a first frame among a plurality of frames for video content. For example, the processor 310 may identify, based on a first seek request related to the video content, the first frame associated with the first seek request, among the plurality of the frames for the video content.

According to an embodiment, the video content may include a plurality of frame sets. A frame set may be referred to as a GOP. For example, each of the plurality of frame sets may include the plurality of frames. For example, the processor 310 may identify a frame set according to the first seek request among the plurality of frame sets. The processor 310 may identify the first frame associated with the first seek request among the plurality of frames in the identified frame set.

According to an embodiment, the plurality of frames may be sequentially arranged based on time. The plurality of frames may include a reference frame (e.g., an I frame) and at least one predicted frame (e.g., a P frame). Each of the plurality of frames may configure a portion of a playback section of the video content. As the plurality of frames are continuously outputted, a portion of the playback section of the video content may be outputted. As an example, the first seek request may indicate a first timing (or a first seek time) in the playback section of the video content. The first frame is outputted at the first timing in the playback section of the video content. For example, the first frame may be outputted during duration according to the first frame from the first timing.

In an operation 420, the processor 310 may perform the decoding of the frames from the reference frame in the plurality of frames to the first frame. For example, the processor 310 may perform the decoding of the frames from the reference frame in the plurality of frames to the first frame, based on identifying the first frame associated with the first seek request.

According to an embodiment, the decoding is sequentially performed from the reference frame to the first frame, by using a decoder 362. The decoding is sequentially performed from the reference frame to the first frame.

In an operation 430, the processor 310 may store one or more decoded frames. For example, the processor 310 may store, in memory (e.g., buffers), one or more decoded frames, based on the decoding. For example, the processor 310 may identify storable buffers to store the decoded frames. In a case that the number of storable buffers is sufficient, the processor 310 may store the decoded frames. In order to store the decoded frames, in a case that the number of storable buffers is insufficient, the processor 310 may store the decoded frames by sequentially deleting the most past frame among allocated buffers.

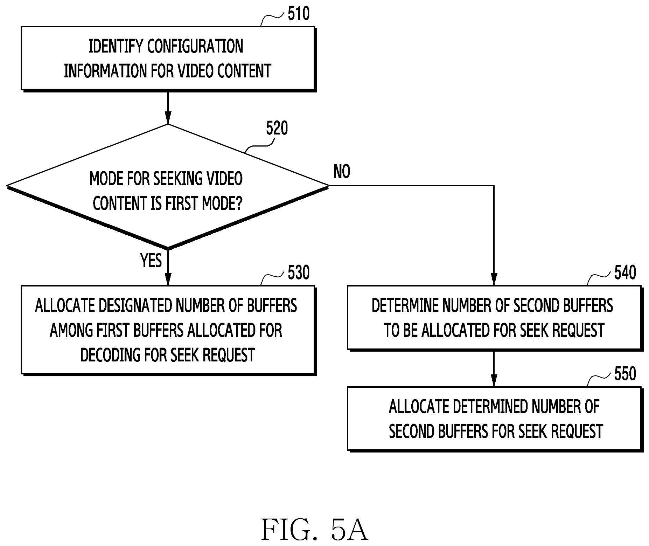

According to an embodiment, one or more decoded frames may be stored in designated buffers. For example, the designated buffers may be changed according to modes for seeking the video content. The modes for seeking the video content may include a first mode and a second mode. For example, the mode for seeking the video content may be determined, based on configuration information on the video content. A detailed operation of the processor 310 for determining the designated buffers will be described later in FIG. 5A.

According to an embodiment, in the first mode, a memory area allocated for the decoder 362 may be shared. Since the memory area allocated for the decoder 362 is shared, at least one buffer allocated for the decoder 362 may be used in a player 352. Since the memory area allocated for the decoder 362 is shared, at least one buffer allocated for the decoder 362 may be used in an output device 353 of the video content. For example, the first mode may be referred to as a zero copy mode or a shared buffer mode.

According to an embodiment, in the second mode, the player 352 may copy the buffers allocated to the decoder 362. As the player 352 copies the buffers allocated to the decoder 362, the number of buffers may not be limited. For example, the second mode may be referred to as a buffer copy mode or a designated buffer mode.

According to an embodiment, in the first mode, the processor 310 may store one or more decoded frames in the designated number of buffers among first buffers allocated for decoding. According to an embodiment, in the second mode, the processor 310 may store one or more decoded frames in second buffers allocated for the seek request.

According to an embodiment, the processor 310 may obtain the decoded frames based on the decoding of the frames from the reference frame to the first frame. The processor 310 may store one or more decoded frames among the decoded frames in the memory 320. For example, the number of one or more decoded frames may correspond to the number of buffers of the memory 320, in which one or more decoded frames are stored. For example, the processor 310 may store one or more decoded frames among decoded frames in buffers of the memory 320, based on the number of buffers.

In an operation 440, the processor 310 may identify a second seek request. For example, the processor 310 may identify the second seek request distinct from the first seek request. For example, the second seek request may indicate a second timing (or a second seek time) in the playback section of the video content. As an example, in the playback section of the video content, the second timing may precede the first timing. For example, the second frame may be outputted at the second timing in the playback section of the video content. For example, the second frame may be outputted during duration according to the second frame from the second timing.

In an operation 450, the processor 310 may determine (or identify) whether the decoded frame corresponding to the second frame is included in one or more decoded frames. For example, the processor 310 may determine (or identify) whether the decoded frame corresponding to the second seek request is included in one or more decoded frames, based on the second seek request.

According to an embodiment, the processor 310 may determine (or identify) whether the decoded frame corresponding to the second seek request is included in one or more decoded frames in order to determine whether to perform the decoding of the second frame.

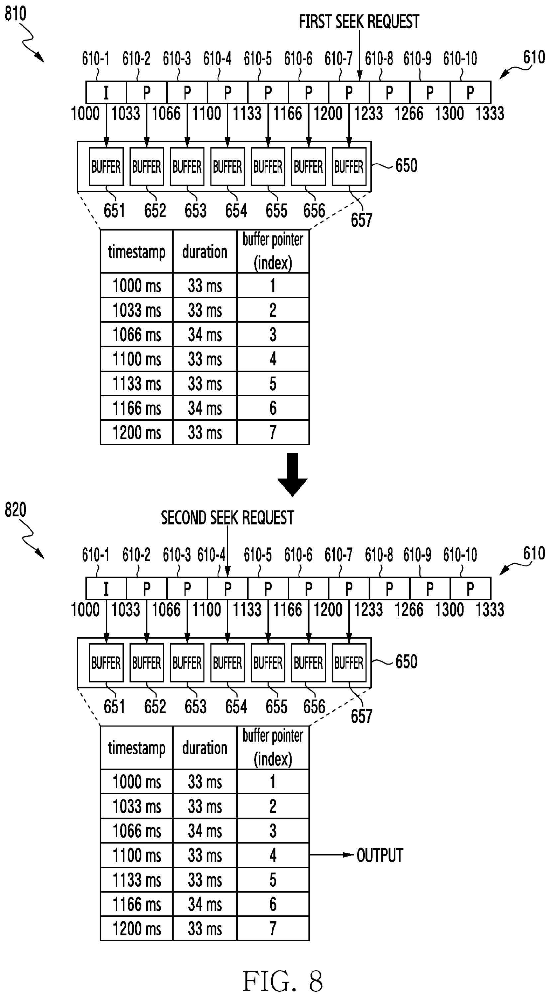

In an operation 460, in a case that the decoded frame corresponding to the second frame is included in one or more decoded frames, the processor 310 may output the decoded frame corresponding to the second frame. For example, in association with a determination that the decoded frame corresponding to the second frame associated with the second seek request is included in one or more decoded frames, the decoded frame stored in the memory 320 and corresponding to the second frame may be outputted through the display 330,. For example, based on identifying that the decoded frame corresponding to the second frame associated with the second seek request is included in one or more decoded frames, the decoded frame stored in the memory 320 and corresponding to the second frame may be outputted through the display 330. In a case that the decoded frame corresponding to the second frame is included in one or more decoded frames, an example of outputting the decoded frame corresponding to the second frame will be described later in FIG. 8.

In an operation 450, the decoded frame corresponding to the second frame is not included in one or more decoded frames, the processor 310 may perform the decoding of the second frame by using the decoder 362. For example, in association with a determination that the decoded frame corresponding to the second frame associated with the second seek request is not included in the one or more decoded frames, the processor 310 may perform the decoding of the second frame, by using the decoder 362. For example, based on identifying that the decoded frame corresponding to the second frame associated with the second seek request is not included in the one or more decoded frames, the processor 310 may perform the decoding of the second frame, by using the decoder 362.

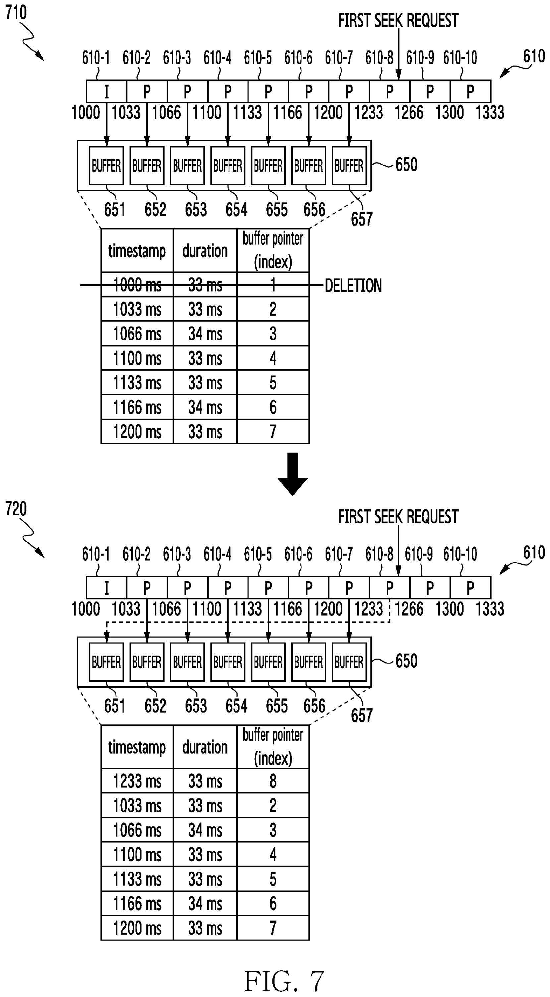

According to an embodiment, even when the second frame is included in the same frame set as the first frame, the decoded frame corresponding to the second frame may not be included in one or more decoded frames. For example, the decoded frame corresponding to the second frame may have been deleted due to a lack of the number of buffers. An example in which the decoded frame corresponding to the second frame is deleted due to a lack of the number of buffers will be described later in FIG. 7. For example, in a case that the second frame is arranged after the first frame, the decoded frame corresponding to the second frame may not be included in one or more decoded frames.

According to an embodiment, even when the second frame is included in the same frame set as the first frame, the processor 310 may perform the decoding of the second frame, in a case that the decoded frame corresponding to the second frame is not included in one or more decoded frames. For example, the processor 310 may perform decoding frames from the reference frame in the frame set including the second frame to the second frame. The processor 310 may output, through the display 330, the decoded frame (or the second frame) corresponding to the second frame, based on the decoding of the frames from the reference frame in the frame set including the second frame to the second frame.

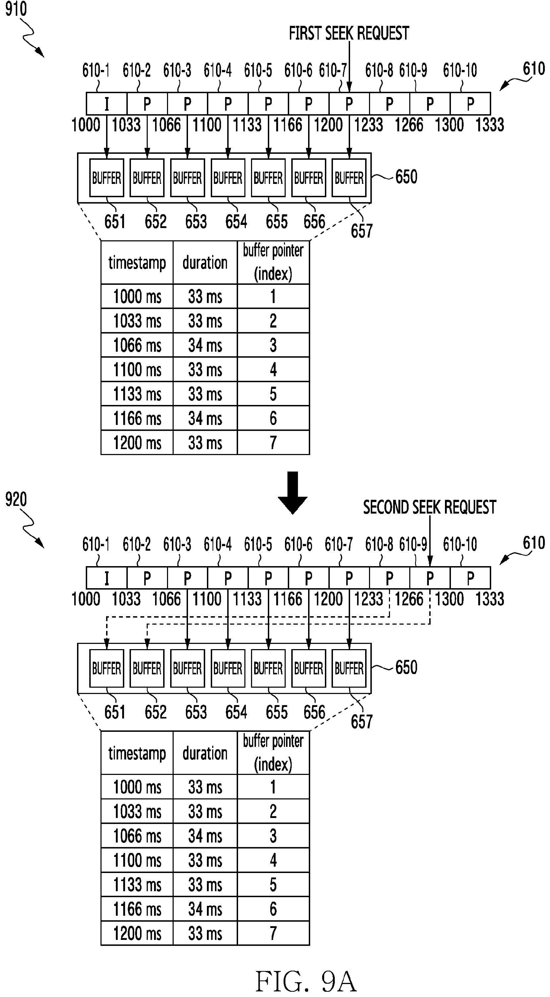

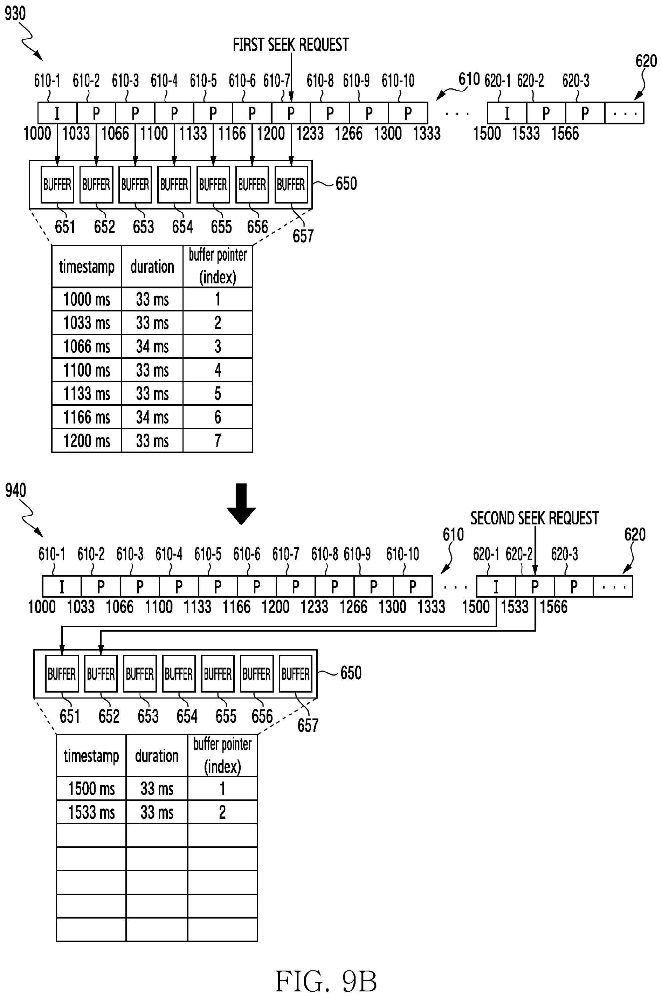

According to an embodiment, the second frame set including the second frame may be distinguished from the first frame set including the first frame. The processor 310 may remove one or more decoded frames stored in the memory 320, based on identifying that the second frame set including the second frame is distinguished from the first frame set including the first frame. The processor 310 may identify the plurality of other frames in the second frame set. The processor 310 may perform decoding frames from the reference frame in a plurality of other frames to the second frame. The processor 310 may store one or more decoded other frames in the memory 320 based on the decoding of the frames from the reference frame in the plurality of other frames to the second frame. In a case that the second frame set including the second frame is distinguished from the first frame set including the first frame, a specific example of storing one or more decoded other frames in the memory 320 will be described later in FIGS. 9A and 9B.

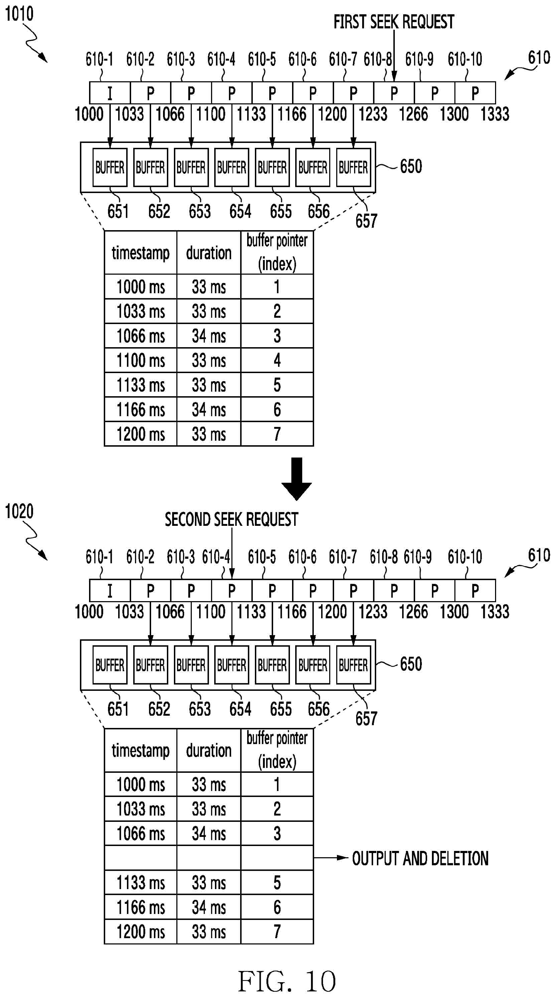

According to an embodiment, the processor 310 may remove the decoded frame from the memory 320, based on outputting the decoded frame corresponding to the second frame among one or more decoded frames. An specific example of removing the decoded frame from the memory 320, based on outputting the decoded frame will be described later in FIG.10. According to an embodiment, even when the processor 310 outputs the decoded frame corresponding to the second frame among one or more decoded frames, the processor 310 may maintain the decoded frame without removing the decoded frame from the memory 320.

FIG. 5A illustrate a flowchart of an operation of an electronic device for determining a method for storing one or more decoded frames.

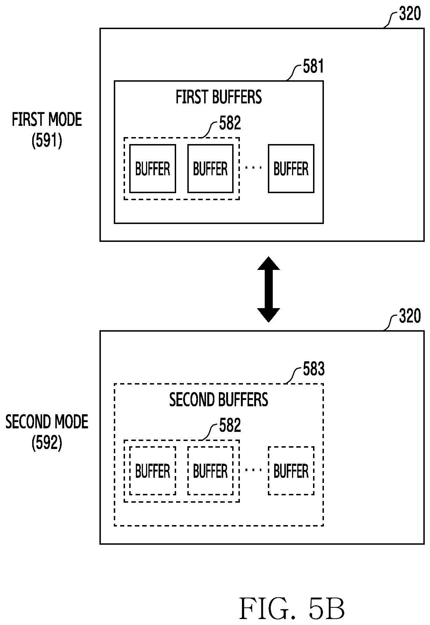

FIG. 5B illustrates an example of buffers configured according to a method for storing one or more decoded frames.

Referring to FIG. 5A, a processor 310 may perform an operation 510 to an operation 550 described below by using a storage method determiner 354.

In the operation 510, the processor 310 may identify configuration information for video content. For example, the configuration information for the video content may include at least one of: information on a mode for seeking the video content, information on a memory resource for the video content, the number of playbacks of the video content, an average playback time of the video content, the number of seek requests of the video content, or the number of frames in a GOP of the video content.

According to an embodiment, the processor 310 may identify the information on the mode for seeking video content among the configuration information for the video content. The processor 310 may identify the mode for seeking the video content as one of a first mode and the second mode, based on the information on the mode for seeking the video content. For example, the information on the mode for seeking the video content may be associated with information on an output operation of a codec.

According to an embodiment, the first mode may be configured for efficient memory management and usage of a decoder 362. In the first mode, a memory area allocated for the decoder 362 may be shared. Since the memory area allocated for the decoder 362 is shared, at least one buffer allocated for the decoder 362 may be used through a player 352. Since the memory area allocated for the decoder 362 is shared, at least one buffer allocated for the decoder 362 may be used in an output device 353. Accordingly, the decoded video may be outputted without being copied to a display 330. Therefore, in the first mode, a memory (or a buffer) copy process in which memory is allocated to a minimum and a high load is generated in the processor 310 (e.g., CPU) may not be performed.

According to an embodiment, in the second mode, the processor 310 may copy buffers allocated to the decoder 362, by using the player 352. The processor 310 may copy the buffers allocated to the decoder 362 for playing the video content. As the buffers allocated to the decoder 362 for playing the video content are copied, the number of buffers may not be limited.

In an operation 520, the processor 310 may identify whether the mode for seeking the video content is the first mode. The processor 310 may identify whether the mode for seeking the video content is the first mode to allocate the buffers for storing decoded frames.

In an operation 530, in a case that the mode for seeking the video content is the first mode, the processor 310 may allocate the designated number of buffers among the first buffers allocated for decoding (or the decoder 362) for a seek request. For example, the processor 310 may allocate the designated number of buffers among the first buffers allocated for decoding for the seek request, based on identifying the mode for seeking the video content as the first mode. For example, in accordance with a determination that the mode for seeking the video content is the first mode, the processor 310 may allocate the designated number of buffers among the first buffers allocated for decoding for the seek request.

According to an embodiment, the decoder 362 (e.g., the decoder 362 of FIG. 3A) may determine the number of the first buffers allocated for decoding. For example, the first buffers may include buffers necessary for decrypting in a codec unit 360, buffers to reduce (or prevent) video disconnection in a playback, and buffers necessary in the output device 353. For example, the storage method determiner 354 (e.g., the storage method determiner 354 of FIG. 3A) may identify the number of first buffers. The storage method determiner 354 may determine the number of buffers among the first buffers that do not need to be returned to the decoder 362. The storage method determiner 354 may allocate the designated number of buffers that do not need to be returned to the decoder 362, for the seek request.

According to an embodiment, the first buffers may be allocated for decoding. For example, the first buffers may include the buffers necessary for decrypting in the codec unit 360, the buffers for reducing (or preventing) the video disconnection in the playback, and the buffers necessary in the output device 353. For example, the number of first buffers may be configured with a sum of the minimum number of the buffers required for decrypting in the codec unit 360, the number of the buffers for reducing (or preventing) the video disconnection in the playback, and the minimum number of the buffers required in the output device 353.

According to an embodiment, the processor 310 may allocate the designated number of buffers among the first buffers. For example, the processor 310 may allocate buffers for reducing (or preventing) the video disconnection in the playback for the seek request. As an example, the number of buffers for reducing (or preventing) the video disconnection in the playback may be configured to 7. The number of buffers required for decrypting in the codec unit 360 may be configured to 6. The number of buffers required in the output device 353 may be configured to 4. Therefore, the number of first buffers may be configured to 17. The processor 310 may allocate 7 buffers for reducing (or preventing) the video disconnection in the playback for the seek request, by using the storage method determiner 354.

In an operation 540, in a case that the mode for seeking the video content is not the first mode, the processor 310 may determine the number of second buffers to be allocated for the seek request. For example, the processor 310 may determine the number of second buffers to be allocated for the seek request, based on identifying the mode for seeking the video content as the second mode. For example, the processor 310 may determine the number of second buffers to be allocated for the seek request, in accordance with a determination that the mode for seeking the video content is the second mode.

In an operation 550, the processor 310 may allocate the determined number of second buffers for the seek request.

According to an embodiment, the processor 310 may determine the number of second buffers to be allocated for the seek request, based on the configuration information for the video content. The second buffers may be distinguished from the first buffers.

According to an embodiment, the processor 310 may determine the number of second buffers to be allocated for the seek request, based on at least one of the configuration information on the information on the memory resource for the video content, the number of playbacks of the video content, the average playback time of the video content, the number of seek requests of the video content, or the number of frames in the GOP of the video content.

According to an embodiment, the processor 310 may determine the number of second buffers, based on whether the memory resource for the video content is sufficient. As the memory resource for the video content is sufficient, the processor 310 may increase the number of second buffers,. According to an embodiment, the processor 310 may use a double buffering method (or a triple buffering method) to increase the number of second buffers.

According to an embodiment, the processor 310 may determine the number of second buffers, based on resolution of the video content. In a case that the resolution of the video content is high, the processor 310 may reduce the number of second buffers to prevent excessive use of the memory resource. As an example, the processor 310 may configure the number of second buffers to 15 for the video content having a first resolution. As an example, the processor 310 may configure the number of second buffers to 7 for the video content having a second resolution higher than the first resolution.

According to an embodiment, the processor 310 may determine the number of second buffers, based on the GOP of the video content. The processor 310 may increase the number of second buffers, based on the GOP larger than a designated size. According to an embodiment, the processor 310 may use the double buffering method (or the triple buffering method) to increase the number of second buffers.

According to an embodiment, the processor 310 may determine the number of second buffers, based on information on preference of a user for the video content. For example, the information on preference of the user for the video content may include the number of playbacks of the video content, the average playback time of the video content, and/or the number of seek requests of the video content.

For example, the number of playbacks of the video content, the average playback time of the video content, and/or the number of seek requests of the video content may be stored in a database for the video content. For example, the number of playbacks of the video content, the average playback time of the video content, and/or the number of seek requests of the video content may be included in metadata of the video content.

According to an embodiment, the processor 310 may determine the number of second buffers, based on the number of playbacks of the video content. The processor 310 may increase the number of second buffers, based on the number of playbacks of the video content greater than the designated number of playbacks. According to an embodiment, the processor 310 may use the double buffering method (or the triple buffering method) to increase the number of second buffers.

According to an embodiment, the processor 310 may determine the number of second buffers, based on the number of the seek requests of the video content. The processor 310 may increase the number of second buffers, based on the number of the seek requests greater than the designated number. According to an embodiment, the processor 310 may use the double buffering method (or the triple buffering method) to increase the number of second buffers.

According to an embodiment, the number of playbacks of the video content may be 50. The number of the seek requests (e.g., a seek request in a reverse direction) of the video content may be 3000. The average playback time of the video content may be 4 seconds. The processor 310 may identify that an average of 60 seek requests (e.g., the seek request in the reverse direction) occur, when the video content is played once. Since the average playback time is 4 seconds, the processor 310 may identify that an average of 15 seek requests have occurred per second. In a case that the average threshold number of the seek requests per second is set to 10, since the average number of the seek requests per second of the video content is 15, the processor 310 may increase the number of second buffers. According to an embodiment, the processor 310 may use the double buffering method (or the triple buffering method) to increase the number of second buffers.

Referring to FIG. 5B, the buffers may be allocated for the seek request according to a first mode 591 and a second mode 592.

According to an embodiment, in the first mode 591, the memory area allocated for the decoder 362 may be shared. Therefore, in the first mode 591, the memory (or the buffer) copy process in which the memory is allocated to the minimum and the high load is generated in the processor 310 (e.g., CPU) may not be performed. According to an embodiment, the frame decoded by the decoder 362 may be outputted to the player 352, the output device 353, and the display 330 without copying. The memory area may be allocated to the minimum through the first mode 591. Memory copying that may put the high load on the CPU through the first mode 591 may not be performed.

According to an embodiment, in the first mode 591, first buffers 581 may be allocated in a storage area of memory 320. The first buffers 581 may be allocated for decoding. For example, the first buffers 581 may include the buffers necessary for decoding in the codec unit 360, the buffers to reduce (or prevent) the video disconnection in the playback, and the buffers necessary in the output device 353.

According to an embodiment, in the first mode 591, the processor 310 may allocate the designated number of buffers 582 among the first buffers for the seek request. The processor 310 may allocate the buffers for reducing (or preventing) the video disconnection in the playback for the seek request. Since the designated number of the buffers 582 among the first buffers are allocated for the seek request in the first mode 591, the number of buffers 582 allocated for the seek request may be fixed.

According to an embodiment, in the second mode 592, the player 352 may copy the buffers allocated to the decoder 362 to output the decoded frames. As the player 352 copies the buffers allocated to the decoder 362, the number of buffers may not be limited.

According to an embodiment, in the second mode 592, the second buffers 583 may be allocated in the storage area of the memory 320. The second buffers 583 may be allocated for the seek request. The processor 310 may determine the number of second buffers 583, based on the configuration information on the video content. In the second mode 592, the number of second buffers may be dynamically changed.

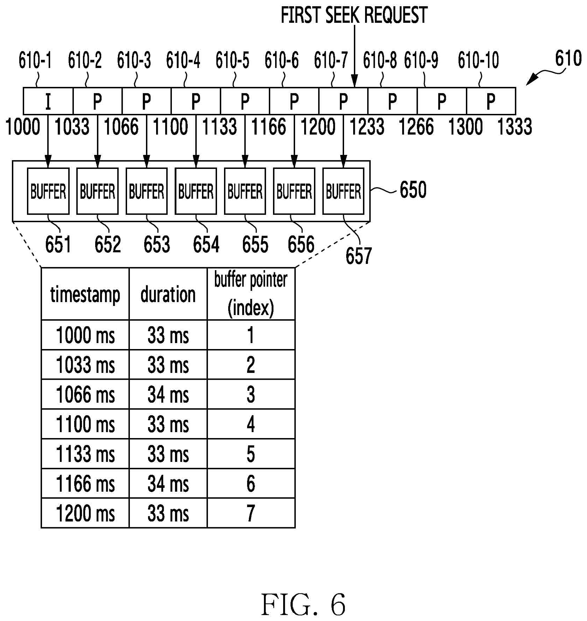

In FIGS. 6 to 11B below, an example of an operation of the electronic device 300 (or the processor 310) for allocating buffers for the seek request, based on the first mode 591 will be described.

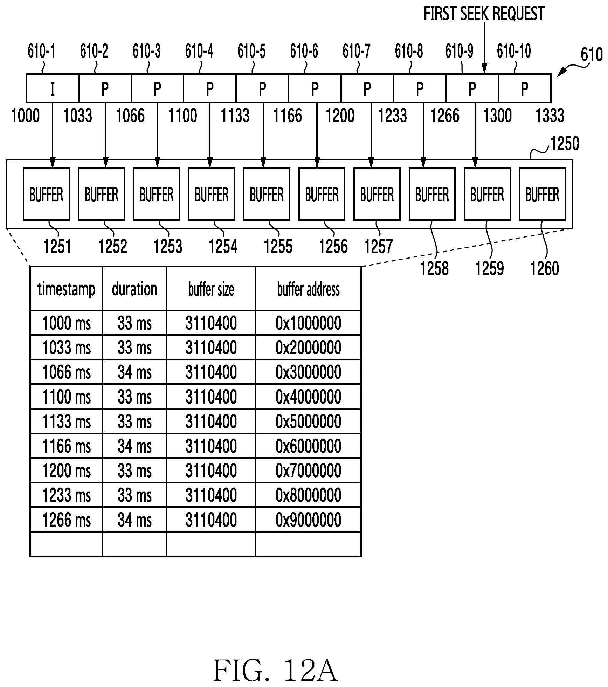

In FIGS. 12A and 12B below, an example of an operation of the electronic device 300 (or the processor 310) for allocating buffers for the seek request, based on the second mode 592 will be described.

FIG. 6 illustrates an example of an operation of an electronic device according to a first seek request.

Referring to FIG. 6, a processor 310 may receive a first seek request through a playback position display unit 381. The processor 310 may identify a first timing (or a first seek time) indicated by the first seek request, by using a player 352. For example, the first timing indicated by the first seek request may indicate 1220 [ms]. The processor 310 may request a frame displayed at the first timing from a demuxer 351.

According to an embodiment, the processor 310 may identify a frame set associated with the first timing (e.g., 1220 [ms]), by using the demuxer 351. The frame set may include a plurality of frames 610. A frame 610-1, which is an initial frame among the plurality of frames 610, may be configured as an I frame (or a reference frame). Among the plurality of frames 610, each of remaining frames except for the initial frame may be configured as a P frame (or a predicted frame).

According to an embodiment, the frame 610-1 may be displayed at 1000 [ms] to 1032 [ms] in playback section of the video content. A frame 610-2 may be displayed at 1033 [ms] to 1065 [ms] in the playback section of the video content. A frame 610-3 may be displayed at 1066 [ms] to 1099 [ms] in the playback section of the video content. A frame 610-4 may be displayed at 1100 [ms] to 1132 [ms] in the playback section of the video content. A frame 610-5 may be displayed at 1134 [ms] to 1165 [ms] in the playback section of the video content. A frame 610-6 may be displayed at 1166 [ms] to 1199 [ms] in the playback section of the video content. A frame 610-7 may be displayed at 1200 [ms] to 1232 [ms] in the playback section of the video content. A frame 610-8 may be displayed at 1233 [ms] to 1265 [ms] in the playback section of the video content. A frame 610-9 may be displayed at 1266 [ms] to 1299 [ms] in the playback section of the video content. A frame 610-10 may be displayed at 1300 [ms] to 1333 [ms] in the playback section of the video content.

According to an embodiment, the processor 310 may obtain the frame 610-1, which is the I frame, by using the demuxer 351. The processor 310 may transmit (or provide) the frame 610-1, which is the I frame, to a decoder 362, by using the player 352. The processor 310 may perform the decoding of the frame 610-1, by using the decoder 362. The processor 310 may store a decoded frame of the frame 610-1 in a buffer 651 among buffers 650, based on decoding of the frame 610-1.

According to an embodiment, the processor 310 may obtain the frame 610-2, which is the P frame, by using the demuxer 351. The processor 310 may transmit (or provide) the frame 610-2, which is the P frame, to the decoder 362, by using the player 352. The processor 310 may perform the decoding of the frame 610-2, by using the decoder 362. For example, the processor 310 may perform the decoding of the frame 610-2, by using the frame 610-1 which is the previous frame of the frame 610-2. The processor 310 may store a decoded frame of the frame 610-2 in the buffer 652 among the buffers 650, based on the decoding of the frame 610-2.

Similar to the above-described example, the processor 310 may perform the decoding of the frame 610-3 to the frame 610-7. The processor 310 may perform the decoding of the frame 610-1, which is the I frame, to the frame 610-7 corresponding to the first timing (e.g., 1220 [ms]). Decoding frames from the frame 610-1 to the frame 610-7 may be sequentially performed.

According to an embodiment, the processor 310 may store a decoded frame of the frame 610-3 in a buffer 653 among the buffers 650, by using a storage manager 355. The processor 310 may store a decoded frame of the frame 610-4 in a buffer 654 among the buffers 650, by using the storage manager 355. The processor 310 may store a decoded frame of the frame 610-5 in a buffer 655 among the buffers 650. The processor 310 may store a decoded frame of the frame 610-6 in a buffer 656 among the buffers 650. The processor 310 may store a decoded frame of the frame 610-7 in a buffer 657 among the buffers 650. For example, the processor 310 may store the decoded frame in the buffer according to the maximum number of storable buffers, by using the storage manager 355.

According to an embodiment, the processor 310 may obtain a timestamp and duration for each frame from the demuxer 351 together with the frames 610-1 to 610-7 to be decoded. The timestamp for each frame may indicate a timing at which each frame is outputted. The duration for each frame may indicate a time period in which output of each frame is maintained.

As described above, 7 buffers 650 may be allocated to store the decoded frames. The 7 buffers 650 may be allocated from the first buffers allocated for decoding. In a case that the buffers 650 are allocated from the first buffers allocated for decoding, each of the buffers 650 may be indicated by a buffer pointer (or a buffer index).

According to an embodiment, a buffer pointer value of the buffer 651 may be configured as a first value (e.g., '1'). A buffer pointer value of the buffer 652 may be configured as a second value (e.g., '2'). A buffer pointer value of the buffer 653 may be configured as a third value (e.g., '3'). A buffer pointer value of the buffer 654 may be configured as a fourth value (e.g., '4'). A buffer pointer value of the buffer 655 may be configured as a fifth value (e.g., '5'). A buffer pointer value of the buffer 656 may be configured as a sixth value (e.g., '6'). A buffer pointer value of the buffer 657 may be configured as a seventh value (e.g., '7').

According to an embodiment, the decoded frame, the timestamps, the duration, and the buffer pointer value may be stored in the buffer (e.g., the buffer 651 to the buffer 657). For example, the decoded frame of the frame 610-1, the timestamp of the frame 610-1, the duration for the frame 610-1, and the buffer pointer value of the buffer 651 may be stored in buffer 651.

According to an embodiment, based on the first seek request, the processor 310 may first decode the frame 610-1, which is the I frame. Since the decoded frame 610-1 is not a frame corresponding to the first timing (e.g., 1220 [ms]) indicated by the first seek request, the processor 310 may not output the frame 610-1. The processor 310 may identify whether there is a free space in the buffers 650 that do not need to be returned to the decoder 362. For example, the processor 310 may identify that the 7 buffers 650 are available. The processor 310 may store the decoded frame 610-1 in the buffer 651. The processor 310 may decode the frames and sequentially store the decoded frames in the buffers 650.

FIG. 6 illustrates an example in which information (e.g., the decoded frames, the timestamp, the duration, and the buffer pointer) is stored in the buffer in a form of a list, but is not limited thereto. In order to store the information in the buffer, at least one of a queue, a map, or a vector may be used.

According to an embodiment, the processor 310 may output the decoded frame of the frame 610-7, based on performing decoding of the frame 610-7 according to the first seek request. The processor 310 may obtain the decoded frame of the frame 610-7, by using the storage manager 355, and may output the decoded frame, by using the output device 353.

According to an embodiment, the processor 310 may identify the frame 610-7 corresponding to the first timing according to the first seek request, based on the timestamps and the durations of the frames 610. For example, the processor 310 may identify the first timing (e.g., 1220 [ms]) according to the first seek request. The processor 310 may identify a frame satisfying the following equation.$ts \leq t \leq ts + d$

Referring to Equation 1, the ts is a timestamp of a frame. The t is the first timing according to the first seek request. the d is duration of a frame. The processor 310 may identify a frame (e.g., frame 610-7) corresponding to the first timing according to the first seek request, by using Equation 1. According to an embodiment, in case that the processor 310 does not identify duration of the frames, the processor 310 may identify a frame satisfying the following equation.$t < tsmin$

Referring to Equation 2, the tsmin is the smallest timestamp among timestamps of frames satisfying Equation 2. The t is the first timing according to the first seek request. The processor 310 may identify a frame (e.g., the frame 610-7) corresponding to the first timing according to the first seek request, by using Equation 2. For example, the processor 310 may identify a frame (e.g., the frame 610-8) having a timestamp of the tsmin. The processor 310 may identify a previous frame of the frame having the timestamp of the tsmin as the frame (e.g., frame 610-7) corresponding to the first timing.

FIG. 7 illustrates an example of an operation of an electronic device according to a first seek request.

Referring to FIG. 7, in a state 710, a processor 310 may identify a first seek request. The first seek request may indicate a first timing (e.g., 1250 [ms]). The processor 310 may identify a plurality of frames 610 including a frame 610-8 for the first timing. The processor 310 may sequentially perform the decoding of frames from a frame 610-1, which is an I frame, to the frame 610-8. A detailed operation of sequential decoding of frames from the frame 610-1 to the frame 610-8 may be referred to FIG. 6.

According to an embodiment, the processor 310 may perform the decoding of the frame 610-7 and store the decoded frame of the frame 610-7 in a buffer 657. Since the number of buffers 650 allocated to store decoded frames is 7, each of the buffers 650 may not store an additional decoded frame.

According to an embodiment, the processor 310 may store the decoded frames in the buffers 650, based on first in first out (FIFO). In a case that information (or data) is stored in all of the buffers 650, the processor 310 may delete information stored in the buffer 651 to store the additional decoded frame. The processor 310 may delete the information (e.g., the decoded frames, a timestamp, duration, and a buffer pointer value for the frame 610-1) stored in the buffer 651 to store a decoded frame for the frame 610-8. According to an embodiment, since the decoded frames are stored in all of 7 buffers, information (e.g., a decoded frame, the timestamp, the durations, and the buffer pointer value of the frame 610-1) of a buffer 656 storing a frame with the smallest timestamp value of 1000 ms may be deleted.

In a state 720, the processor 310 may perform the decoding of the frame 610-8 and store the decoded frame of the frame 610-8 in the buffer 651. For example, the buffer 651 may store a timestamp (e.g., 1233 [ms]) for the frame 610-8, duration (e.g., 33 [ms]) for the frame 610-8, and a buffer pointer value (e.g., 8) for the buffer 651. For example, in a case that the decoded frame of the frame 610-8 is stored, the buffer pointer value for the buffer 651 may be changed. The processor 310 may delete the information (e.g., the decoded frame, the timestamp, the duration, and the buffer pointer value of the frame 610-1) stored in the buffer 651 having a first buffer pointer value (e.g., '1') and return the buffer 651 having the first buffer pointer value (e.g., '1') to the decoder 362. The processor 310 may store the decoded frame, the timestamp, the duration, and the buffer pointer value for the frame 610-8 in the buffer 651 having a second buffer pointer value (e.g., '8'). According to an embodiment, the processor 310 may overwrite the decoded frame of a frame 610-9 on the buffer 651 without deleting the information stored in the buffer 651. In this case, the buffer pointer value also may be maintained.

Although not illustrate, in a case that decoding of the frame 610-9 is performed, the processor 310 may store a decoded frame of the frame 610-9 in a buffer 652. The processor 310 may delete information stored in the buffer 652 to store the decoded frame of the frame 610-9. After the information stored in the buffer 652 is deleted, the processor 310 may store the decoded frame of the frame 610-9 in the buffer 652. According to an embodiment, the processor 310 may overwrite the decoded frame of the frame 610-9 in the buffer 652 without deleting the information stored in the buffer 652.

According to an embodiment, the processor 310 may return the buffers 650 to the decoder based on identifying a playback start request through the player 352. The processor 310 may release allocation of the buffers 650 for the seek request. After the allocation of the buffers 650 is released, the buffers 650 may be used for playing the video content.

FIG. 8 illustrates an example of an operation of an electronic device according to a first seek request and a second seek request.

Referring to FIG. 8, in a state 810, the processor 310 may decode a frame 610-1 to a frame 610-7, based on the first seek request. The processor 310 may store decoded frames of the frame 610-1 to the frame 610-7 in buffers 650. A technical feature in which the decoded frames of the frame 610-1 to the frame 610-7 are stored in the state 810 may correspond to the technical feature of FIG. 6.

In a state 820, the processor 310 may identify the second seek request. The processor 310 may identify (or receive) the second seek request through a playback position display unit 381. The processor 310 may identify a second timing indicated by the second seek request, by using a player 352. The second timing may be earlier than a first timing. For example, the second timing indicated by the second seek request may indicate 1120 [ms]. The processor 310 may identify a frame 610-4 corresponding to the second timing.

The processor 310 may identify whether the decoded frames stored in the buffers 650 include a decoded frame of the frame 610-4 corresponding to the second timing. The processor 310 may identify that a buffer 654 includes the decoded frame of the frame 610-4. The processor 310 may output the decoded frame of the frame 610-4 stored in the buffer 654, by using a storage manager 355. As the decoded frame of the frame 610-4 stored in the buffer 654 is outputted, decoding of the frame 610-4 may not be performed. Therefore, as the decoded frame of the frame 610-4 stored in buffer 654 is outputted, delay time for decoding may be reduced.

FIG. 9B illustrates an example of an operation of an electronic device according to a first seek request and a second seek request.

FIG. 9B illustrates an example of an operation of an electronic device according to a first seek request and a second seek request.

Referring to FIG. 9A, in a state 910, a processor 310 may decode a frame 610-1 to a frame 610-7, based on the first seek request. The processor 310 may store decoded frames of the frame 610-1 to the frame 610-7 in buffers 650. A technical feature in which the decoded frames of the frame 610-1 to the frame 610-7 are stored in the state 910 may correspond to the technical feature of FIG. 6.

In a state 920, the processor 310 may identify the second seek request. The processor 310 may identify (or receive) the second seek request through a playback position display unit 381. The processor 310 may identify a second timing indicated by the second seek request, by using a player 352. The second timing may be slower than a first timing. For example, the second timing indicated by the second seek request may indicate 1180 [ms]. The processor 310 may identify a frame 610-9 corresponding to the second timing. The processor 310 may identify that a frame set including the frame 610-9 corresponding to the second timing corresponds to the frame set including the frame 610-7.

The processor 310 may identify whether the decoded frames stored in the buffers 650 include the decoded frame of the frame 610-9 corresponding to the second timing. Since the second timing is after the first timing, the processor 310 may identify that the frame 610-9 is not included in the decoded frames stored in the buffers 650. The processor 310 may perform the decoding of a frame 610-8 in order to perform the decoding of the frame 610-9. The processor 310 may store the decoded frame of the frame 610-8 in the buffer 651. The processor 310 may perform the decoding of the frame 610-9. The processor 310 may store the decoded frame of the frame 610-9 in the buffer 652. The processor 310 may output the decoded frame of the frame 610-9, based on obtaining the decoded frame of the frame 610-9.

Referring to FIG. 9B, in a state 930, the processor 310 may decode the frame 610-1 to the frame 610-7, based on the first seek request. The state 930 may correspond to the state 910 of FIG. 9A.

In a state 940, the processor 310 may identify the second seek request. The processor 310 may identify (or receive) the second seek request through the playback position display unit 381. The processor 310 may identify the second timing indicated by the second seek request, by using the player 352. The second timing may be slower than the first timing. For example, the second timing indicated by the second seek request may indicate 1550 [ms]. The processor 310 may identify a frame 620-2 corresponding to the second timing. The processor 310 may identify that a frame set including the frame 620-2 corresponding to the second timing is distinct from the frame set including the frame 610-7.

According to an embodiment, the processor 310 may identify that the frame 620-1, which is an I frame, exists between the first timing and the second timing. The processor 310 may perform the decoding of the frame 620-1, which is the I frame, to the frame 620-2 corresponding to the second timing. The processor 310 may store decoded frames from the frame 620-1 to the frame 620-2 in the buffers 650. For example, the processor 310 may remove information stored in the buffers 650 according to the first seek request, and store decoded frames from the frame 620-1 to the frame 620-2 in the buffers 650.

According to an embodiment, the processor 310 may remove the information stored in the buffers 650 and return the buffers 650 to a decoder 362. The processor 310 may obtain the frame 620-1, by using a demuxer 351. The processor 310 may perform the decoding of the frames from the frame 620-1 to the frame 620-2, by using the decoder 362, and store the decoded frame in the buffer 651 and the buffer 652.

FIG. 10 illustrates an example of an operation of an electronic device according to a first seek request and a second seek request.

Referring to FIG. 10, in a state 1010, the processor 310 may perform the decoding and may not store a decoded frame in buffers 650, in a case that the decoded frame is outputted.

According to an embodiment, the processor 310 may identify the first seek request. The processor 310 may identify a first timing indicated by the first seek request. For example, the first timing may be 1250 [ms]. The processor 310 may identify a frame 1250 corresponding to the first timing.

According to an embodiment, the processor 310 may decode frames from a frame 610-1 to a frame 610-8 to output a decoded frame of the frame 610-8. For example, the processor 310 may sequentially decode frames from the frame 610-1 to the frame 610-8.

According to an embodiment, the processor 310 may store a decoded frame of the frame 610-1 in a buffer 651 among the buffers 650. The processor 310 may store a decoded frame of a frame 610-2 in a buffer 652 among the buffers 650. The processor 310 may store a decoded frame of the frame 610-3 in a buffer 653 among the buffers 650. The processor 310 may store a decoded frame of the frame 610-4 in a buffer 654 among the buffers 650. The processor 310 may store a decoded frame of the frame 610-5 in a buffer 655 among the buffers 650. The processor 310 may store a decoded frame of a frame 610-6 in a buffer 656 among the buffers 650. The processor 310 may store a decoded frame of a frame 610-7 in a buffer 657 among the buffers 650.

According to an embodiment, the processor 310 may output the decoded frame of the frame 610-8 without storing the decoded frame for the frame 610-8 in a buffer (e.g., the buffer 651), based on the decoding of the frame 610-8 corresponding to the first timing. Accordingly, the processor 310 may store the decoded frames of the frame 610-1 to the frame 610-7 in the buffer 650, based on outputting the decoded frame of the frame 610-8.

According to an embodiment, in a state 1020, the processor 310 may identify the second seek request. The processor 310 may identify (or receive) the second seek request through a playback position display unit 381. The processor 310 may identify a second timing indicated by the second seek request, by using a player 352. The second timing may be earlier than the first timing. For example, the second timing indicated by the second seek request may indicate 1120 [ms]. The processor 310 may identify the frame 610-4 corresponding to the second timing.

According to an embodiment, the processor 310 may identify whether the decoded frames stored in the buffers 650 include the decoded frame of the frame 610-4 corresponding to the second timing. The processor 310 may identify that the buffer 654 includes the decoded frame of the frame 610-4. The processor 310 may output the decoded frame of the frame 610-4 stored in the buffer 654, by using a storage manager 355. As the decoded frame of the frame 610-4 stored in the buffer 654 is outputted, the decoded frame of the frame 610-4 may be deleted from the buffer 654. According to an embodiment, the processor 310 may return the buffer 654 to the decoder 362, based on deleting the decoded frame of the frame 610-4 from the buffer 654.

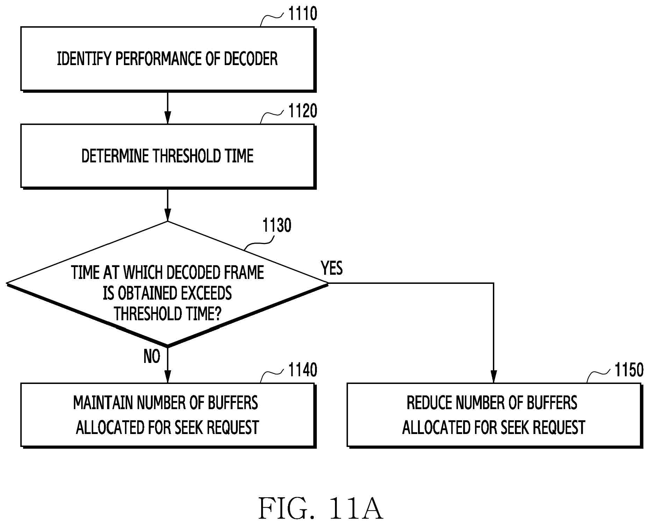

FIG. 11A is illustrate a flowchart of an operation of an electronic device in a case that an error occurs in the designated number of buffers allocated for a seek request.

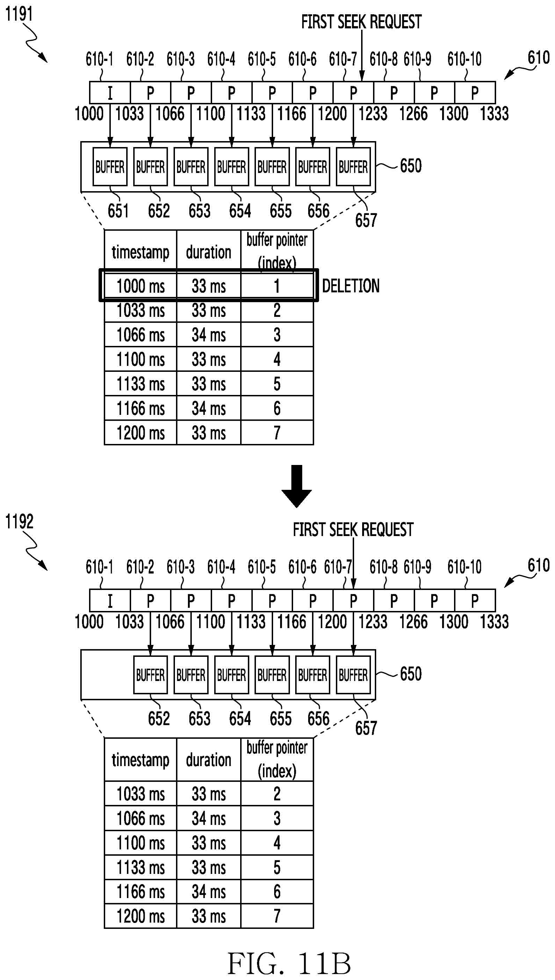

FIG. 11B illustrates an example in which the number of buffers allocated for a seek request is reduced.

Referring to FIG. 11A, a processor 310 may allocate the designated number of buffers among first buffers allocated for decoding for the seek request. The processor 310 may not return the allocated designated number of buffers to a decoder 362, while the seek request is maintained. Since a portion of the first buffers allocated for decoding are allocated for the seek request, in a case that an error occurs in the designated number, a shortage of available buffers in the decoder 362 may occur. For example, the number of buffers allocated for the seek request was set to 7, but the number of buffers allocated for the seek request may need to be 5, due to the error in configuring the number of an output of a codec.

An operation 1110 to an operation 1150 below will describe an example of an operation of the processor 310 for solving a problem caused by the shortage of buffers available in the decoder 362.

In the operation 1110, the processor 310 may identify a performance of the decoder 362. In an operation 1120, the processor 310 may determine threshold time, based on the performance of the decoder 362. In the operation 1110 and the operation 1120, the processor 310 may identify the performance of the decoder 362 and determine, based on the performance of the decoder 362, the threshold time. For example, the processor 310 may identify the performance of the decoder 362 to determine the threshold time. Hereinafter, a specific example of the performance of the decoder 362 and an example of the threshold time determined according to the performance will be described.

According to an embodiment, in a case that an electronic device 300 includes a hardware codec 340 and the decoder 362 (or a codec unit 360) is included in the hardware codec 340, an accurate performance of the hardware codec 340 (or the decoder 362) may be estimated.

For example, FPS according to resolution may be used as a performance of the codec unit 360. The FPS according to the resolution of the codec unit 360 may be configured as the following table.

**[Table 1]**

| Codec | Resolution | FPS |
|---|---|---|
| h.264 | 1920x1080 | 480 |
| | 3840x2160 | 240 |
| | 7680x4320 | 60 |

Table 1 indicates the FPS according to the resolution of the h.264 codec. This is exemplary, and the processor 310 may also identify FPS according to resolution for other codecs.

Referring to Table 1, in a case that the resolution of video content is 1920 x 1080, the FPS may be 480. The processor 310 may identify that decoding time for one frame is 2.08 (=1000/480) [ms]. The processor 310 may determine the threshold time, based on a path through which the decoded frame is transmitted. For example, the processor 310 may determine the threshold time, based on a multiple (e.g., two times or three times) of the decoding time for one frame.

Referring to Table 1, in a case that the resolution of the video content is 2560 x 1440, the FPS for the resolution of 3840 x 2160 may be used. In a case that the resolution of the video content is 2560 x 1440, the processor 310 may identify the FPS as 240. The processor 310 may identify that the decoding time for one frame is 4.16 (=1000/240) [ms]. The processor 310 may determine the threshold time as 8 [ms].

For example, block-per-second according to a block size may be used as the performance of the codec unit 360. The block-per-second according to the block size of the codec unit 360 may be configured as the following table.

**[Table 2]**

| Codec | Block-size | Block-per-second |
|---|---|---|
| h.264 | 16x16 | 7776000 |

Table 2 indicates the block-per-second according to the block size of the h.264 codec. This is exemplary, and the processor 310 may also identify the block-per-second according to a block size of other codecs.

Referring to Table 2, the processor 310 may decode 1,990,656,000 pixels per 1 second, by using the h.264 codec. The number of pixels decoded per 1 second may be identified by a product of the block size (i.e., 16x16) and the number (i.e., 7776000) of processing of the block-per-second. In a case that the resolution of the video content is 1920x1080, the processor 310 may identify that 960 frames ((1,990,656,000 / 1920)/ 1080) per 1 second may be decoded through the h.264 codec.

As described above, the processor 310 may configure the threshold time through a storage manager 355.

In an operation 1130, the processor 310 may identify whether time at which a decoded frame is obtained exceeds the threshold time. In order to identify whether a problem occurs in an operation of the decoder 362, the processor 310 may identify whether the time at which the decoded frame is obtained exceeds the threshold time.

In an operation 1140, in a case that the time at which the decoded frame is obtained does not exceed the threshold time, the processor 310 may maintain the number of buffers allocated for the seek request. The processor 310 may maintain the number of buffers allocated for the seek request, based on identifying that the time at which the decoded frame is obtained does not exceed the threshold time. The processor 310 may maintain the number of buffers allocated for the seek request, based on identifying that the time at which the decoded frame is obtained is within the threshold time. The processor 310 may maintain the number of buffers allocated for the seek request in association with a determination that the time at which the decoded frame is obtained is within the threshold time.

In an operation 1150, in a case that the time at which the decoded frame is obtained exceeds the threshold time, the processor 310 may reduce the number of buffers allocated for the seek request. The processor 310 may reduce the number of buffers allocated for the seek request, based on identifying that the time at which the decoded frame is obtained exceeds the threshold time. The processor 310 may reduce the number of buffers allocated for the seek request in association with a determination that the time at which the decoded frame is obtained exceeds the threshold time. The processor 310 may return at least one reduced buffer to the decoder 362.

According to an embodiment, the processor 310 may reduce the number of buffers allocated for the seek request by one, based on identifying that the time at which the decoded frame is obtained exceeds the threshold time. The processor 310 may reduce the number of buffers allocated for the seek request by one, until the time at which the decoded frame is obtained is within the threshold time. For example, the processor 310 may reduce the maximum number of allocable buffers for the seek request, based on identifying that the time at which the decoded frame is obtained exceeds the threshold time.

In FIG. 11B, an specific example in which the number of buffers allocated for the seek request is reduced will be described.

Referring to FIG. 11B, in a state 1191, the processor 310 may decode frames from a frame 610-1 to a frame 610-7, based on a first seek request. The processor 310 may store decoded frames of the frames from the frame 610-1 to the frame 610-7 in buffers 650.

According to an embodiment, the processor 310 may identify that the time at which the decoded frame is obtained exceeds the threshold time, after the decoded frames from the frame 610-1 to the frame 610-7 are stored in the buffers 650.

In a state 1192, the processor 310 may return one (e.g., a buffer 651) of the buffers 650 to the decoder 362, based on identifying that the time at which the decoded frame is obtained exceeds the threshold time.

According to an embodiment, in a case that the threshold time is determined to be 4 [ms], in a case that the decoded frame is not obtained within 4 [ms], the processor 310 may identify the number of buffers 650, by using the storage manager 355. In a case that the number of buffers 650 is 7, the processor 310 may remove the decoded frame of the first obtained frame 610-1 from the buffer 651. The processor 310 may return the buffer 651 to the decoder 362. The processor 310 may change the number of buffers 650 from 7 to 6. The processor 310 may reduce the number of buffers allocated for the seek request by one until the time at which the decoded frame is obtained is within the threshold time.

FIG. 12A illustrates an example of buffers allocated for a seek request, based on a second mode.

FIG. 12B illustrates an example of additional buffers allocated for a seek request based on a second mode.

Referring to FIG. 12A, the processor 310 may play video content, based on the second mode. For example, the processor 310 may configure a mode for seeking the video content as the second mode.

According to an embodiment, in the second mode, a player 352 may copy buffers allocated to a decoder 362. In the second mode, the number of second buffers to be allocated for the seek request may not be limited. In the second mode, the processor 310 may directly allocate the buffer in memory 320 other than a buffer pointer (or a buffer index). The buffers allocated for the seek request may be configured by copying buffers allocated to the decoder 362.

According to an embodiment, the processor 310 may allocate second buffers 1250 for the seek request. For example, the number of second buffers 1250 may be configured with 10. For example, the second buffers 1250 may include a buffer 1251, a buffer 1252, a buffer 1253, a buffer 1254, a buffer 1255, a buffer 1256, a buffer 1257, a buffer 1258, a buffer 1259, and a buffer 1260.

According to an embodiment, as illustrated in FIG. 12A, in the processor 310, each of the buffers in the second buffers 1250 may store a decoded frame, a timestamp, duration, a buffer size, and a buffer address. In the second mode, in a case that the second buffers 1250 in the memory 320 are directly allocated, the maximum number of the allocated second buffers 1250 may be configured to be greater than the maximum number of buffers allocated for the seek request in the first mode.

According to an embodiment, the processor 310 may delete the decoded frame from the buffer, in a case that the decoded frame is outputted from one of the second buffers 1250 according to the seek request, as illustrated in FIG. 10.

According to an embodiment, the processor 310 may not delete the decoded frame in the buffer even in case of being outputted from one of the second buffers 1250 according to the seek request. Since the processor 310 may dynamically change the number of second buffers 1250, and may sufficiently maintain the number of second buffers 1250, even in case of being outputted from one of the second buffers 1250 according to the seek request, the decoded frame in the buffer may not be deleted.

According to an embodiment, the processor 310 may further allocate not only the second buffers 1250 but also third buffers for the seek request. The third buffers may be configured as illustrated in FIG. 12B. For example, in a case that double buffering is applied, the processor 310 may allocate the third buffers (e.g., third buffers 1280 of FIG. 12B) in addition to the second buffers 1250 for the seek request.

Referring to FIG. 12A and FIG. 12B, in a case that the decoded frame is stored in the second buffers 1250 as illustrated in FIG. 12A, the processor 310 may identify that a frame set including a frame 620-2 according to a second timing indicated by a second seek request is distinguished from a frame set including a frame 610-9 according to a first timing indicated by a first seek request.

According to an embodiment, as illustrated in FIG. 12A, based on the first seek request, the processor 310 may store the decoded frames of a frame 610-1 to the frame 610-9 in 9 buffers (e.g., the buffer 1251 to the buffer 1259) of the second buffers 1250.

According to an embodiment, the processor 310 may identify a second frame set distinct from a first frame set of the decoded frames stored in the 9 buffers, based on the second seek request. The processor 310 may identify a plurality of frames 620 in the second frame set. The processor 310 may perform the decoding of the frames from an I frame 620-1 to the frame 620-2 among the plurality of frames 620. The processor 310 may store the decoded frames obtained, based on decoding of the frames from 620-1 to the frame 620-2 in the third buffers 1280 distinguished from the second buffers 1250. For example, the third buffers 1280 may include a buffer 1281, a buffer 1282, a buffer 1283, a buffer 1284, a buffer 1285, a buffer 1286, a buffer 1287, a buffer 1288, a buffer 1289, and a buffer 1290.

According to an embodiment, the processor 310 may additionally allocate the third buffers 1280 without deleting data stored in the second buffers 1250 based on the second seek request.

According to an embodiment, the processor 310 may identify that the decoded frame of the frame (e.g., the frame 610-4) according to a third timing indicated by the third seek request corresponds to one of the decoded frames stored in the second buffers 1250. The processor 310 may output the decoded frame of the frame according to the third timing from one of the second buffers 1250.

As described above, the processor 310 may allocate the second buffers 1250 for the first frame set and may allocate the third buffers 1280 for the second frame set. In a case that the seek request is identified in two frame sets, the processor 310 may be stored in the second buffers 1250 and the third buffers 1280 and output the decoded frame according to the seek request. According to an embodiment, in a case that the seek request is identified in a third frame set distinct from the two frame sets, all data stored in the second buffers 1250 may be deleted and the decoded frames for the third frame set may be stored in the second buffers 1250.

In FIG. 12B, an example in which the second buffers 1250 and the third buffers 1280 are configured for two frame sets has been described, but is not limited thereto. According to an embodiment, the buffers may be allocated for three or more frame sets.

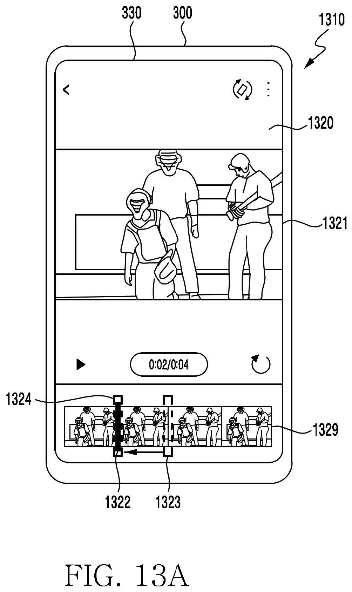

FIG. 13A illustrates an example of a user interface for a seek request.

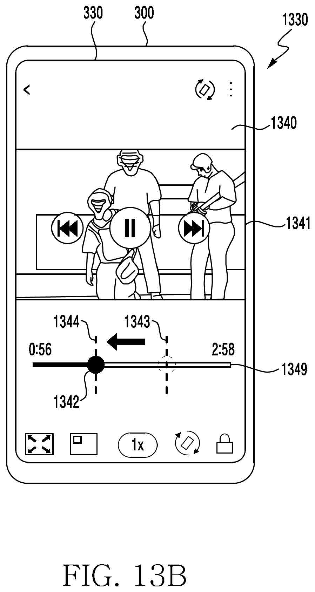

FIG. 13B illustrates an example of a user interface for a seek request.

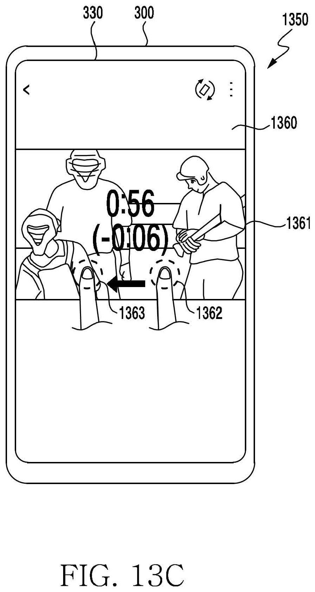

FIG. 13C illustrates an example of a user interface for a seek request.

Referring to FIG. 13A to FIG. 13C, a processor 310 of an electronic device 300 may display user interfaces 1320, 1340, and 1360 for playing video content through a display 330. For example, the user interfaces 1320, 1340, and 1360 may be configured to play video content 1321, 1341, and 1361.

Referring to FIG. 13A, in an example 1310, the user interface 1320 may be associated with a gallery application. The gallery application may provide a function for a preview of the video content.

According to an embodiment, the processor 310 may display a filmstrip 1329 associated with the video content. The processor 310 may display an element 1322 for moving a playback timing on the film strip.

According to an embodiment, the processor 310 may identify a first seek request based on the element 1322 being moved to a first point 1323. As an example, the processor 310 may identify a first frame associated with the first seek request. The processor 310 may identify a frame set including the first frame. The processor 310 may perform the decoding frames from a reference frame to the first frame among the frame set (or a plurality of frames of the frame set). The processor 310 may store one or more decoded frames in memory 320.

According to an embodiment, the processor 310 may identify that the element 1322 is moved from the first point 1323 to a second point 1324. The processor 310 may identify a second seek request, based on identifying that the element 1322 is moved from the first point 1323 to the second point 1324. As an example, the processor 310 may identify the second frame associated with the second seek request. The processor 310 may identify that the decoded frame corresponding to the second frame is included in one or more decoded frames. The processor 310 may output the decoded frame corresponding to the second frame without performing decoding of the second frame. Since the processor 310 does not perform the decoding of the second frame, the second frame may be displayed without delay.

Referring to FIG. 13B, in an example 1330, the user interface 1340 may be related to an image playing application.

According to an embodiment, the processor 310 may display an element 1349 (e.g., a playback bar, a scrub bar, a scrubber seek bar, a progress bar, or a track slider) indicating a playback section of the video content. The processor 310 may display an element 1342 for indicating the timing of the playback section on the element 1349.

According to an embodiment, the processor 310 may identify the first seek request, based on the element 1322 being moved to a first point 1323. As an example, the processor 310 may identify the first frame associated with the first seek request. The processor 310 may identify the frame set including the first frame. The processor 310 may perform the decoding of the frames from the reference frame to the first frame among the frame set (or the plurality of frames of the frame set). The processor 310 may store one or more decoded frames in the memory 320.

According to an embodiment, the processor 310 may identify that the element 1342 is moved from a first point 1343 to a second point 1344. The processor 310 may identify the second seek request, based on identifying that the element 1322 is moved from the first point 1323 to the second point 1324. As an example, the processor 310 may identify the second frame associated with the second request. The processor 310 may identify that the decoded frame corresponding to the second frame is included in one or more decoded frames. The processor 310 may output the decoded frame corresponding to the second frame without performing decoding of the second frame. Since the processor 310 does not perform the decoding of the second frame, the second frame may be displayed without delay.

Referring to FIG. 13C, in an example 1350, the user interface 1360 may be related to the image playing application.

According to an embodiment, the processor 310 may not display an element indicating the playback section of the video content. According to an embodiment, the processor 310 may display the element indicating the playback section of the video content, based on a designated input (e.g., a tap input, a button input).

According to an embodiment, the processor 310 may identify a touch input moved from the first point 1362 to the second point 1363. The seek request may be identified, based on a length at which the touch input from the first point 1362 to the second point 1363 is moved. For example, the processor 310 may identify whether a decoded frame of a frame according to a timing corresponding to the identified seek request has been stored in the memory 320. The processor 310 may output the decoded frame, based on identifying that the decoded frame of the frame according to the timing is stored in the memory 320.

Referring to FIG. 13A, FIG. 13B, and FIG. 13C, the processor 310 may allocate buffers for the seek request, based on the seek request (e.g., a seek request in a reverse direction) and a storage manager 355 may allocate buffers for the seek request based on the number of outputted buffers. In a case that the seek request (e.g., the request to seek in the reverse direction) is repeatedly identified, as illustrated in FIG. 13A, FIG. 13B, and FIG. 13C, the frame (or the decoded frame) stored in the buffer may be immediately outputted. According to the above-described embodiment, as delay time is reduced, a user experience may be improved.

The above-described embodiments have been described in an example performed in the electronic device 300, but are not limited thereto. The seek request may be identified in an external electronic device (e.g., a wearable device, a vehicle) connected with the electronic device 300. The processor 310 of the electronic device 300 may receive the seek request from the external electronic device and output the frame, based on the received seek request. According to an embodiment, the processor 310 may receive the seek request from the electronic device 300 and transmit the seek request to the external electronic device, while the video content is outputted from the external electronic device.

According to an embodiment, the processor 310 may change a size of a buffer by using the storage manager 355. For example, the processor 310 may determine the size of the buffer, by using the storage manager 355, based on a frame type finally outputted according to resolution of the display 330. For example, the processor 310 may identify the resolution of the display 330. The processor 310 may identify the outputted resolution, based on a foldable display, a rollable display, and/or a display for displaying a virtual space. The processor 310 may determine the size of the buffer, based on the outputted resolution. The processor 310 may scale the decoded frame, based on the outputted resolution, and store the scaled frame. The processor 310 may identify a size of the display 330 outputted in real time and change the size of the buffer in real time.

According to an embodiment, an electronic device may include a display, memory storing instructions and comprising buffers, and at least one processor including processing circuitry. The instructions, when executed by the at least one processor individually or collectively, may cause the electronic device to identify, based on a first seek request related to video content, a first frame associated with the first seek request, among a plurality of frames in a group of pictures (GOP) of the video content. The instructions, when executed by the at least one processor individually or collectively, may cause the electronic device to perform a decoding of frames from a reference frame in the plurality of frames to the first frame. The instructions, when executed by the at least one processor individually or collectively, may cause the electronic device to store, in the buffers of the memory, one or more decoded frames among decoded frames from the decoded reference frame to the decoded first frame. The instructions, when executed by the at least one processor individually or collectively, may cause the electronic device to, based on a second seek request distinct from the first seek request, in association with a determination that a decoded frame corresponding to a second frame associated with the second seek request is included in at least one decoded frame stored in the buffers, display, through the display, the decoded frame corresponding to the second frame.

According to an embodiment, the instructions, when executed by the at least one processor individually or collectively, may cause the electronic device to, based on a second seek request distinct from the first seek request, in association with a determination that the decoded frame corresponding to the second frame associated with the second seek request is not included in the one or more decoded frames, perform decoding of the second frame.

According to an embodiment, the instructions, when executed by the at least one processor individually or collectively, may cause the electronic device to determine, based on configuration information for the video content, allocating a designated number of buffers for a seek request, among first buffers allocated for the decoding. The instructions, when executed by the at least one processor individually or collectively, may cause the electronic device to store the one or more decoded frames in the designated number of buffers among the first buffers allocated for the decoding.

According to an embodiment, the instructions, when executed by the at least one processor individually or collectively, may cause the electronic device to determine, based on the configuration information for the video content, a number of second buffers to be allocated for the seek request, distinct from the first buffers. The instructions, when executed by the at least one processor individually or collectively, may cause the electronic device to store the one or more decoded frames in the determined number of the second buffers.

According to an embodiment, the configuration information for the video content may comprise at least one of information on a mode for seeking the video content, information on memory resource for the video content, a number of playbacks of the video content, an average playback time of the video content, the number of seek requests of the video content, or the number of frames in the GOP, of the video content.

According to an embodiment, the plurality of frames may be sequentially arranged based on time. The decoding may be sequentially performed from the reference frame to the first frame.

According to an embodiment, the instructions, when executed by the at least one processor individually or collectively, may cause the electronic device to store, in the memory, the one or more decoded frames among decoded frames obtained by the decoding of frames from the reference frame to the first frame.

According to an embodiment, a number of the one or more decoded frames may correspond to a number of buffers of the memory, in which the one or more decoded frames are stored.

According to an embodiment, the video content may comprise a plurality of GOPs. The instructions, when executed by the at least one processor individually or collectively, may cause the electronic device to identify the GOP based on the first seek request, among the GOPs. The instructions, when executed by the at least one processor individually or collectively, may cause the electronic device to identify the first frame associated with the first seek request, among the plurality of frames in the GOP.

According to an embodiment, the instructions, when executed by the at least one processor individually or collectively, may cause the electronic device to identify another GOP based on the second seek request, among the plurality of GOPs. The instructions, when executed by the at least one processor individually or collectively, may cause the electronic device to perform decoding of frames from a reference frame in a plurality of other frames comprised in the another GOP to the second frame.

According to an embodiment, the instructions, when executed by the at least one processor individually or collectively, may cause the electronic device to remove, based on identifying the another GOP based on the second seek request, among the plurality of GOPs, the one or more decoded frames stored in the memory. The instructions, when executed by the at least one processor individually or collectively, may cause the electronic device to store, in the memory, one or more decoded other frames based on the decoding of the frames from the reference frame comprised in the plurality of other frames to the second frame.

According to an embodiment, the first seek request may indicate a first timing in a playback section of the video content. The second seek request may indicate a second timing being distinct from the first timing in the playback section of the video content.

According to an embodiment, the first frame may be outputted at the first timing in the playback section of the video content. The second frame may be outputted at the second timing in the playback section of the video content.

According to an embodiment, the reference frame may correspond to an intra-coded frame, (I frame). Each of at least one remaining frame except the reference frame among the one or more decoded frames may correspond to one of a predicted frame (P frame), or a bi-directionally predicted frame (B frame).

According to an embodiment, a method performed by an electronic device may comprise identifying, based on a first seek request related to video content, a first frame associated with the first seek request, among a plurality of frames in a group of pictures (GOP) for the video content. A method may comprise performing a decoding of frames from a reference frame in the plurality of frames to the first frame. A method may comprise storing, in buffers of memory of the electronic device, one or more decoded frames among decoded frames from the decoded reference frame to the decoded first frame. A method may comprise, based on a second seek request distinct from the first seek request, in association with a determination that a decoded frame corresponding to a second frame associated with the second seek request is included in at least one decoded frame stored in the buffers, displaying, through the display of the electronic device, the decoded frame corresponding to the second frame.

According to an embodiment, the method may comprise, based on a second seek request distinct from the first seek request, in association with a determination that the decoded frame corresponding to the second frame associated with the second request is not included in the one or more decoded frames, performing decoding of the second frame.

According to an embodiment, the method may comprise determining, based on configuration information for the video content, allocating a designated number of buffers for a seek request, among first buffers allocated for the decoding. The method may include storing the one or more decoded frames in the designated number of buffers among the first buffers allocated for the decoding.

According to an embodiment, the method may comprise determining, based on the configuration information for the video content, a number of second buffers to be allocated for the seek request, distinct from the first buffers. The method may include storing the one or more decoded frames in the determined number of the second buffers.

According to an embodiment, the plurality of frames may be sequentially arranged based on time. The decoding may be sequentially performed from the reference frame to the first frame.

According to an embodiment, non-transitory computer readable storage medium may store one or more programs. The one or more programs, when executed by a processor of an electronic device with memory, may include instructions that cause to identify, based on a first seek request related to video content, a first frame associated with the first seek request, among a plurality of frames in a group of pictures (GOP) of the video content. The one or more programs, when executed by the processor, may include instructions that cause to perform a decoding of frames from a reference frame in the plurality of frames to the first frame. The one or more programs, when executed by the processor, may include instructions that cause to store, in buffers of the memory, one or more decoded frames among decoded frames from the decoded reference frame to the decoded first frame. The one or more programs, when executed by the processor, may include instructions that cause to, based on a second seek request distinct from the first seek request, in association with a determination that a decoded frame corresponding to a second frame associated with the second seek request is included in at least one decoded frame stored in the buffers, display, through the display, the decoded frame corresponding to the second frame.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., via a wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
memory storing instructions and comprising buffers; and
at least one processor comprising processing circuitry,
wherein the instructions, when executed by the at least one processor individually or collectively, cause the electronic device to:
identify, based on a first seek request related to video content, a first frame associated with the first seek request, among a plurality of frames in a group of pictures (GOP) of the video content,
perform a decoding of frames from a reference frame in the plurality of frames to the first frame,
store, in the buffers of the memory, one or more decoded frames among decoded frames from the decoded reference frame to the decoded first frame, and
based on a second seek request distinct from the first seek request:
in association with a determination that a decoded frame corresponding to a second frame associated with the second seek request is included in at least one decoded frame stored in the buffers, display, through the display, the decoded frame corresponding to the second frame.

2. The electronic device of claim 1, wherein the instructions, when executed by the at least one processor individually or collectively, further cause the electronic device to, based on the second seek request distinct from the first seek request:
in association with a determination that the decoded frame corresponding to the second frame associated with the second seek request is not included in the one or more decoded frames, perform decoding of the second frame.

3. The electronic device of claim 2, wherein the instructions, when executed by the at least one processor individually or collectively, further cause the electronic device to:
determine, based on configuration information for the video content, allocating, among first buffers allocated for the decoding, a designated number of buffers for a seek request, and
store the one or more decoded frames in the designated number of buffers among the first buffers allocated for the decoding.

4. The electronic device of claim 3, wherein the instructions, when executed by the at least one processor individually or collectively, further cause the electronic device to:
determine, based on the configuration information for the video content, a number of second buffers to be allocated for the seek request, the second buffers being distinct from the first buffers, and
store the one or more decoded frames in the determined number of the second buffers.

5. The electronic device of claim 4, wherein the configuration information for the video content comprises at least one of:
information on a mode for seeking the video content,
information on memory resource for the video content,
a number of playbacks of the video content,
an average playback time of the video content,
the number of seek requests of the video content, or
the number of frames in the GOP of the video content.

6. The electronic device of claim 1, wherein the plurality of frames are sequentially arranged based on time, and
wherein the decoding is sequentially performed from the reference frame to the first frame.

7. The electronic device of claim 6, wherein the instructions, when executed by the at least one processor individually or collectively, further cause the electronic device to store, in the memory, the one or more decoded frames among decoded frames obtained by the decoding of the frames from the reference frame to the first frame.

8. The electronic device of claim 7, wherein a number of the one or more decoded frames corresponds to a number of buffers of the memory, in which the one or more decoded frames are stored.

9. The electronic device of claim 2, wherein the video content comprises a plurality of GOPs, and
wherein the instructions, when executed by the at least one processor individually or collectively, further cause the electronic device to:
identify the GOP based on the first seek request, among the plurality of GOPs, and
identify the first frame associated with the first seek request, among the plurality of frames in the GOP.

10. The electronic device of claim 9, wherein the instructions, when executed by the at least one processor individually or collectively, further cause the electronic device to
identify another GOP based on the second seek request, among the plurality of GOPs, and
perform decoding of frames from a reference frame in a plurality of other frames comprised in the another GOP to the second frame.

11. The electronic device of claim 10, wherein the instructions, when executed by the at least one processor individually or collectively, further cause the electronic device to
remove, based on identifying the another GOP based on the second seek request, among the plurality of GOPs, the one or more decoded frames stored in the memory, and
store, in the memory, one or more decoded other frames based on the decoding of the frames from the reference frame in the plurality of other frames to the second frame.

12. The electronic device of claim 2, wherein the first seek request indicates a first timing in a playback section of the video content, and
wherein the second seek request indicates a second timing being distinct from the first timing in the playback section of the video content.

13. The electronic device of claim 12, wherein the first frame is outputted at the first timing in the playback section of the video content, and
wherein the second frame is outputted at the second timing in the playback section of the video content.

14. A method performed by an electronic device, the method comprising:
identifying, based on a first seek request related to video content, a first frame associated with the first seek request, among a plurality of frames in a group of pictures (GOP) for the video content,
performing a decoding of frames from a reference frame in the plurality of frames to the first frame,
storing, in buffers of memory of the electronic device, one or more decoded frames among decoded frames from the decoded reference frame to the decoded first frame, and
based on a second seek request distinct from the first seek request:
in association with a determination that a decoded frame corresponding to a second frame associated with the second seek request is included in at least one decoded frame stored in the buffers, displaying, through the display of the electronic device, the decoded frame corresponding to the second frame.

15. Non-transitory computer readable storage medium storing one or more programs, wherein the one or more programs, when executed by a processor of an electronic device with memory, including instructions that cause to:
identify, based on a first seek request related to video content, a first frame associated with the first seek request, among a plurality of frames in a group of pictures (GOP) of the video content,
perform a decoding of frames from a reference frame in the plurality of frames to the first frame, and
store, in buffers of the memory, one or more decoded frames among decoded frames from the decoded reference frame to the decoded first frame, and
based on a second seek request distinct from the first seek request:
in association with a determination that a decoded frame corresponding to a second frame associated with the second seek request is included in at least one decoded frame stored in the buffers, display, through the display, the decoded frame corresponding to the second frame.
